# EUROPÄISCHE PATENTSCHRIFT

(11) **EP 0 859 345 B1**
(45) Veröffentlichungstag und Bekanntmachung des Hinweises auf die Patenterteilung: **08.05.2002**
(21) Anmeldenummer: 98100204.1
(22) Anmeldetag: 08.01.1998
(51) Int. Cl.: G08B 15/00, F16M 11/12

(54) **Schutzgehäuse für optische Geräte mit einem Haltekörper zum Anbringen an einer Befestigungsfläche**
Protective casing for optical apparatus with device for fixing to a surface
Boîtier de protection pour appareils optiques avec dispositif de fixation à une surface

(30) Priorität: 13.02.1997 DE 19705404; 28.10.1997 DE 29719106 U
(43) Veröffentlichungstag der Anmeldung: 19.08.1998
(73) Patentinhaber: VIDEOR TECHNICAL E. HARTIG GmbH, 63322 Rödermark (DE)
(72) Erfinder: Bernhardt, Rainer, 61191 Rossbach (DE)
(74) Vertreter: Zapfe, Hans, Dipl.-Ing.

(56) Entgegenhaltungen:
- EP-A- 0 446 875
- NL-A- 7 205 216
- US-A- 4 217 606
- US-A- 4 736 218
- US-A- 5 443 235
- US-A- 5 598 207

## Beschreibung

Die Erfindung betrifft ein Schutzgehäuse mit einer Rückwand, die mit einer Kabeleinführung versehen ist, und mit einer Fensterwand für optische Geräte mit einer optischen Achse, wobei das Schutzgehäuse zum räumlichen Ausrichten der optischen Achse eine Befestigungseinrichtung mit feststellbaren Gelenkgliedern, Schwenkachsen und mit einem Haltekörper aufweist, der eine feststellbare Drehfassung mit einer ersten Schwenkachse und eine Anlagefläche für das Anbringen an einer Befestigungsfläche besitzt, und wobei die Schwenkachse der Drehfassung senkrecht zur Anlagefläche ausgerichtet ist und die Befestigungseinrichtung mindestens eine weitere Schwenkachse aufweist, die senkrecht zur ersten Schwenkachse ausgerichtet ist.

Derartige Schutzgehäuse dienen beispielhaft, aber nicht ausschließlich, zur Unterbringung von Videokameras, Lampen und Sensoren (Bewegungsmeldern) von Überwachungsanlagen für Grundstücke und Gebäude, insbesondere im Rahmen sogenannter Überwachungssysteme mit einem geschlossenen Video-Kreislauf. Das Schutzgehäuse dient dabei nicht nur zum Schutz gegen Umgebungseinflüsse wie Witterung, Dämpfe und Stäube, sondern auch gegen Sabotage. Ein besonderes Problem bilden hierbei die elektrischen Anschlußkabel zur Stromversorgung und zur Weiterleitung der aufgenommenen Signale. Die Stromversorgung dient beispielsweise auch zum Beheizen der Fensterwand zwecks Vermeidung von Kondensationsvorgängen, wenn derartige Schutzgehäuse beispielsweise im Freien angeordnet und sämtlichen Witterungseinflüssen ausgesetzt sind. Derartige Kabel besitzen eine Vielzahl von Adern und sind entsprechend steif; sie sind aber auch äußerst gefährdet gegenüber Sabotageakten. Ein Durchtrennen der Kabel hat einen völligen Ausfall des betreffenden Gerätes zur Folge.

Durch die DE 40 08 340 C2 ist es bekannt, Schutzgehäuse für optische Geräte im Bereich ihres Massenschwerpunktes auf einem feststellbaren Schwenk-Neige-Kopf mit zwei senkrecht zueinander stehenden Schwenkachsen anzuordnen, um die optische Achse in einer Vielzahl von Raumkoordinaten ausrichten zu können. Die Befestigungseinrichtung ist hierbei eine sogenannte Wandkonsole, die nur an zumindest angenähert senkrecht verlaufenden Flächen befestigt werden kann. Für das Aufhängen des bekannten Schutzgehäuses unter einer Raumdecke wird ein zusätzlicher Deckenhalter benötigt. Um bei der bekannten Lösung das Kabel gegen Sabotageakte zu schützen, wird eine besondere Kabelabdeckung benötigt, die vom Schwenk-Neige-Kopf entlang der Unterseite des Schutzgehäuses bis zu dessen Rückwand geführt wird, in der sich entsprechende Steckverbindungen für den Kabelanschluß befinden. Die bekannte Lösung hat sich in der Praxis für aufwendige Überwachungsanlagen bestens bewährt; sie ist jedoch für einfachere Überwachungssysteme zu aufwendig, und insbesondere sind mit der Wandkonsole bei unterschiedlichen Anbringungsarten nicht alle Raumkoordinaten mit der optischen Achse zu erreichen, weil beispielsweise die Kabelabdeckung an die Wandkonsole anstößt. Etwa zwischengeschaltete Distanzstücke haben den Nachteil, daß das System zu Schwingungen neigt, die beispielsweise bei Videokameras zu unscharfen Bildern führen.

Durch die EP 0 285 922 A2 ist es auch bekannt, die Rückwand solcher Schutzgehäuse über ein Gelenk mit einer waagerechten Achse an einer senkrechten Wand zu befestigen. Hierbei ist aber nur ein Schwenken der optischen Achse in einer senkrechten Ebene möglich, und für eine Befestigung an der Decke ist die bekannte Lösung nicht geeignet. Außerdem wird dem Schutz des Anschlußkabels keinerlei Beachtung geschenkt. Für den Fall einer Befestigung auf einer waagerechten Fläche ist bei der bekannten Lösung wiederum die übliche Unterstützung unterhalb des Schwerpunktes des Schutzgehäuses vorgesehen, d.h. die Raumlage der Befestigungsfläche bestimmt die Auswahl der Befestigungsmittel.

Durch offenkundige Vorbenutzung ist weiterhin ein Wandhalter bekannt, der über ein Z-förmiges Gelenkglied mit der Rückseite des Schutzgehäuses verbunden ist. Im Bereich dieses Gelenkgliedes befinden sich zwei Achsen, die senkrecht zueinander, aber parallel zur Wandfläche verlaufen, so daß die optische Achse in Richtung unterschiedlicher Raumkoordinaten festgestellt werden kann. Für eine Deckenbefestigung oder für eine Befestigung über einer waagerechten Fläche eignet sich die bekannte Lösung nicht, da hierfür die Schwenkwinkel zu gering sind; außerdem gestaltet sich die Kabelführung durch das Z-förmige Gelenkglied und die Gelenkstellen hindurch außerordentlich kompliziert.

Durch die EP 0 468 839 A1 ist eine Video-Überwachungskamera mit einem integrierten Wand- und Deckenhalter bekannt, bei der das Kameragehäuse aus zwei zusammengesetzten Halbschalen besteht, die nicht notwendigerweise Kugelschalen sein müssen. Dieses Kameragehäuse ist formschlüssig in den Halter eingesetzt, der zur verdeckten Kabelführung als Hohlkörper ausgebildet ist, aber nicht gabelförmig ausgebildet sein muß, sondern auch einseitig ausgebildet sein kann. In jedem Falle handelt es sich aber um eine integrale Baueinheit, bei der das Kameragehäuse nicht gegen ein herkömmliches, auf dem Markt befindliches Kameragehäuse ausgetauscht werden kann.

Diese bekannte Lösung besitzt nur zwei Schwenkachsen, nämlich eine erste Schwenkachse U, die durch die Verbindungsstelle(n) von Kameragehäuse und Halter verläuft, und eine zweite, hierzu senkrecht verlaufende Schwenkachse V, die durch die drehbare Verbindungsstelle des Halters mit einem Montagering verläuft, der mit einer Decken- oder Wandfläche (Montagefläche) verschraubbar ist, so daß diese zweite Schwenkachse V auch senkrecht zu dieser Montagefläche verläuft. Es ist zwar auch eine dritte Achse W angegeben, die aber nur eine Verschiebeachse für die Kamera ist und parallel zur Montagefläche verlaufen soll.

Damit hat es folgende Bewandtnis: Solange der Halter an einer waagrechten Montagefläche befestigt ist, lassen sich - bei genau senkrecht und waagrecht stehenden Bildrändern - praktisch alle Raumkoordinaten diesseits der Montagefläche mit der optischen Achse erreichen. Ist jedoch der Halter an einer nicht waagrechten, z.B. senkrechten Montagefläche befestigt, so gilt die Schwenkbarkeit der optischen Achse nur für zwei Grenzfälle: Im ersten Fall muß die optische Achse unter ausschließlicher Drehung des Halters um die Achse V in einer Ebene verschwenkt werden, die genau parallel zur Montagefläche verläuft; im zweiten Fall muß die optische Achse unter ausschließlicher Drehung des Kameragehäuses um die Achse U in einer Ebene verschwenkt werden, die genau senkrecht zur Montagefläche verläuft. In allen anderen Fällen, d.h. in den am meisten vorkommenden Zwischenstellungen, bedarf es eines Zusammenwirkens von Drehungen um beide Achsen U und V, was automatisch zu einem Schiefstellen der waagrechten und senkrechten Bildränder führt. Hierfür ist kein Ausgleich vorgesehen, und eine Parallelverschiebung der Kamera entlang der zur Montagefläche parallelen Koordinate W, für die keine Mittel angegeben sind, würde diese Schiefstellung nicht beseitigen.

Außerdem muß das Kabel oder müssen die Kabel während der Integration von Halter und Kameragehäuse um mehrere Ecken geknickt eingezogen werden, was bei der Steifigkeit der üblichen, notwendigerweise abgeschirmten Kabel schwierig, wenn nicht gar unmöglich ist. Das Einziehen des Kabels muß also beim Hersteller erfolgen und kann nicht bei der Montage durchgeführt werden, wenn z.B. lediglich Kamera und Kameragehäuse zum Zwecke einer Modernisierung des Systems ausgetauscht werden sollen.

Der Erfindung liegt daher die Aufgabe zugrunde, ein Schutzgehäuse der eingangs angegebenen Gattung anzugeben, das ohne Schwierigkeiten beim Einziehen auch steifer Kabel baulich mit einer Befestigungseinrichtung verbunden werden kann, die das Anbringen und Justieren des Schutzgehäuses unabhängig von der Raumlage der Montagefläche in den unterschiedlichsten Raumlagen der optischen Achse ohne zusätzliche Bauteile ermöglicht, und ohne daß sich hierbei die Bildränder schiefstellen.

Die Lösung der gestellten Aufgabe erfolgt bei zwei ersten Ausführungsbeispielen erfindungsgemäß dadurch, daß
a) zwischen der Rückwand und dem Haltekörper drei Gelenkglieder angeordnet sind, wobei das erste Gelenkglied über die Drehfassung mit dem Haltekörper und das dritte Gelenkglied mit der Rückwand verbunden ist,
b) bei zwei weiteren, zwischen den Gelenkgliedern angeordneten Schwenkachsen diese senkrecht zueinander und zur Schwenkachse der Drehfassung ausgerichtet sind, wobei in montiertem Zustand des Schutzgehäuses eine der weiteren Schwenkachsen waagrecht und die jeweils andere Schwenkachse senkrecht ausgerichtet ist, und daß
c) die Gelenkglieder einen im wesentlichen in die gestreckte Lage bringbaren Kabelführungskanal umschließen, der zur Kabeleinführung in der Rückwand führt.

Die Lösung der gestellten Aufgabe erfolgt bei einem dritten Ausführungsbeispiel erfindungsgemäß dadurch, daß
a) zwischen der Rückwand und dem Haltekörper mindestens zwei Gelenkglieder angeordnet sind,
b) das erste Gelenkglied über die Drehfassung mit dem Haltekörper und das letzte Gelenkglied mit der Rückwand über eine weitere feststellbare Drehfassung verbunden ist, die eine weitere Schwenkachse aufweist, die die Rückwand durchdringt und parallel zur optischen Achse (AO) verläuft, und durch die das Schutzgehäuse relativ zum letzten Gelenkglied und zu der mindestens einen weiteren Schwenkachse verdrehbar ist, und daß
c) die Gelenkglieder einen im wesentlichen in die gestreckte Lage bringbaren Kabelführungskanal umschließen, der zur Kabeleinführung in der Rückwand führt.

Durch die erfindungsgemäße Ausbildung der Befestigungseinrichtung wird auf einfachste Weise erreicht, daß praktisch unabhängig von der Raumlage der Befestigungsfläche nahezu alle Raumkoordinaten mit der optischen Achse erreicht werden können. Die Befestigungseinrichtung verläuft dabei zwischen der Rückwand des Schutzgehäuses und dem Haltekörper und bildet dabei eine Baugruppe mit dem Schutzgehäuse, was nicht bedeutet, daß eine einstückige Ausführung erforderlich oder ein Auswechseln des Schutzgehäuses nicht möglich wäre. Auf eine Z-förmige Ausbildung eines oder mehrerer der Gelenkglieder wird hierbei verzichtet, so daß auch die Hindurchführung von steifen Kabeln keine Schwierigkeiten verursacht. Bei der provisorischen Montage werden die Gelenkglieder ganz einfach in eine gestreckte Lage gebracht, so daß sie gewissermaßen einen geradlinigen Kabelkanal großen Querschnitts ganz oder teilweise umschließen. Erst bei einer Justierung des optischen Systems in der Gebrauchslage werden die Gelenkglieder entsprechend der Raumlage ihrer Achsen festgestellt. Einzelheiten und die damit verbundenen Vorteile werden anhand der Detailbeschreibung noch näher erläutert.

Es ist dabei ganz besonders vorteilhaft, wenn - entweder einzeln oder in Kombination - :
- das erste Gelenkglied, die erste Schwenkachse mindestens teilweise umschließend, mittels einer drehbaren Flanschplatte in die Drehfassung eingesetzt ist,
- zwischen dem an der Drehfassung angeordneten Gelenkglied und dem an der Rückwand angeordneten Gelenkglied ein mittleres Gelenkglied angeordnet ist,
- bei Anordnung von drei Gelenkgliedern die jeweils zwischen zwei Gelenkgliedern liegenden Schwenkachsen parallel zueinander verlaufen,
- mindestens eines der Gelenkglieder auf mindestens einem Teil seiner Länge einen U-förmigen Querschnitt aufweist,
- mindestens eines der Gelenkglieder auf mindestens einem Teil seiner Länger einen rohrförmigen Querschnitt aufweist,
- die Gelenkglieder in einem Faltenbalg untergebracht sind, der an seinem einen Ende mit dem Haltekörper und an seinem anderen Ende mit der Rückwand des Schutzgehäuses verbunden ist,
- das letzte Gelenkglied mittels eines drehbaren Ringflansches in die feststellbare Drehfassung in der Rückwand des Schutzgehäuses eingesetzt ist,
- a) das erste Gelenkglied und das dritte Gelenkglied je eine Teilkugelschale aufweist, deren Außenflächen aufeinander zugerichtet sind und die je eine Durchbrechung aufweisen, wobei die erste Schwenkachse und die zweite Schwenkachse, beide senkrecht aufeinander stehend, durch den Mittelpunkt der Teilkugelschale des ersten Gelenkgliedes verlaufen, und wenn die dritte Schwenkachse durch den Mittelpunkt der Teilkugelschale des dritten Gelenkgliedes verläuft, sowie
   b) das zweite Gelenkglied als geradliniger Hohlkörper ausgeführt und um die Mittelpunkte der Teilkugelschalen schwenkbar durch die Durchbrechungen hindurchgeführt ist, sowie
   c) im Innern der Teilkugelschalen Druckkörper mit äußeren Rotationsflächen angeordnet sind, die die Durchbrechungen mindestens teilweise überdecken und mit den beiden Enden des zweiten Gelenkgliedes zugfest verbunden sind, und wenn
   d) Spannmittel vorgesehen sind, durch die die beiden Druckkörper und mit ihnen das zweite Gelenkglied verdrehfest und verschiebefest an den Teilkugelschalen festlegbar sind,
- die zweite und die dritte Schwenkachse parallel zueinander durch die Mittelpunkte der beiden Teilkugelschalen verlaufen,
- das Spannmittel ein zwischen den Teilkugelschalen angeordnetes und das zweite Gelenkglied umgebendes, axial geteiltes Druckglied mit den Teilkugelschalen angepaßten konkaven Druckflächen ist, durch deren radiales Zusammenziehen die Teilkugelschalen gegen die beiden Druckkörper verspannbar sind,
- die Durchbrechungen in den Teilkugelschalen schlitzförmig ausgebildet und von untereinander parallelen Kanten begrenzt sind, deren Abstand den Außerquerschnitten des zweiten Gelenkgliedes entsprechen, und wenn die Durchbrechungen sich mindestens zwischen der Achse und dem Rand der Teilkugelschale erstrecken,
- die Teilkugelschalen an ihrer Basis durch einen hohlzylindrischen Abschnitt gleichen Durchmessers verlängert sind,
- das zweite Gelenkglied als Hohlzylinder ausgebildet ist, oder wenn
- das zweite Gelenkglied als Vierkantrohr ausgebildet ist,
- die Teilkugelschale des dritten Gelenkgliedes durch eine Drehfassung mit dem Schutzgehäuse verbunden ist.

Der Erfindungsgegenstand schafft einen Kabelkanal großen Querschnitts, der bei einer provisorischen Montage in eine gestreckte Lage gebracht werden kann. Dadurch wird das Einführen eines Kabels enorm erleichtert.

Insbesondere entsteht eine Reihenanordnung von Gelenkgliedern, die in eine gestreckte Lage gebracht werden können, wodurch wiederum das Hindurchführen eines steifen und sperrigen Kabels erleichtert wird. Auch in jedem Falle bilden bereits die Gelenkglieder - je nach ihrer Raumform - einen sehr weitgehenden Sabotageschutz gegen eine Beschädigung des Kabels.

Wenn die zweite Schwenkachse und die dritte Schwenkachse parallel zueinander verlaufen, wird ein sehr großer Schwenkwinkel ohne scharfen Knick ermöglicht.

Wenn die zweite Schwenkachse und die dritte Schwenkachse senkrecht zueinander und zur ersten Schwenkachse verlaufen, wird ein räumlich auseinandergezogenes und feststellbares Kardangelenk gebildet, das in besonders universeller Weise eine Vielzahl von Raumstellungen der optischen Achse ermöglicht.

Es ist dabei weiterhin möglich, mindestens einem der Gelenkglieder auf mindestens einem Teil seiner Länge einen U-förmigen Querschnitt zu geben, wodurch bereits ein weitgehender Kabelschutz erreicht wird. Es ist aber besonders vorteilhaft, wenn mindestens eines der Gelenkglieder auf mindestens einem Teil seiner Länge einen rohrförmigen Querschnitt aufweist, wobei der Begriff "rohrförmig" sowohl runde als auch quadratische oder rechteckige oder sogar polygonale Rohrquerschnitte einschließt. Auf die angegebene Weise wird ein vollständiger Kabelschutz auf der gesamten Länge erreicht.

Es ist schließlich von besonderem Vorteil, wenn die Gelenkglieder in einem Faltenbalg untergebracht sind, insbesondere dann, wenn der Faltenbalg an seinem einen Ende mit dem Haltekörper und an seinem anderen Ende mit der Rückwand des Schutzgehäuses verbunden ist.

Auf diese Weise läßt sich nicht nur ein zuverlässiger Witterungsschutz, sondern auch ein zusätzlicher Sabotageschutz erreichen, ganz einfach deswegen, weil der Verlauf des Kabels von außen nicht ohne weiteres zu erkennen ist. Die Verwendung eines Faltenbalges auf dem Umfang der Gelenkglieder wird besonders dann begünstigt, wenn die zweite und die dritte Schwenkachse parallel zueinander verlaufen, weil hierdurch die Voraussetzung dafür gegeben ist, daß die Krümmung des Faltenbalges über eine größere Weglänge verteilt wird.

Eine ganz besonders vorteilhafte Ausführungsform des Erfindungsgegenstandes zeichnet sich dadurch aus, daß eine weitere Schwenkachse zur relativen Verdrehung des Schutzgehäuses gegenüber dem Haltekörper und den Gelenkgliedern vorgesehen ist, die die Rückwand durchdringt und parallel zur optischen Achse verläuft. Dabei weist die Rückwand des Schutzgehäuses vorzugsweise eine weitere feststellbare Drehfassung auf, in die das letzte Gelenkglied mittels eines weiteren, drehbaren Ringflansches eingesetzt ist und die letzte Schwenkachse mindestens teilweise umschließt und dadurch einen Kabelkanal bildet.

Wenn also zwei Drehfassungen vorhanden sind, wird die Reihenanordnung von Gelenkgliedern sowohl gegenüber der ersten Drehfassung als auch gegenüber der zweiten Drehfassung und dem Schutzgehäuse relativ verdrehbar und wieder feststellbar, so daß die Zahl der Freiheitsgrade weiter erhöht wird. In allen Fällen läßt sich dadurch die senkrechte Bildachse einer Videokamera auch senkrecht ausrichten. Aus Rationalisierungsgründen ist es besonders vorteilhaft, wenn die beiden Drehfassungen zumindest überwiegend aus den gleichen Bauteilen aufgebaut sind.

Ausführungsbeispiele des Erfindungsgegenstandes werden nachfolgend anhand der Figuren 1 bis 24 näher erläutert.

Es zeigen:
- Figur 1: einen Vertikalschnitt durch ein Schutzgehäuse und ein erstes Ausführungsbeispiel einer Befestigungseinrichtung,
- Figur 2: einen teilweisen Horizontalschnitt und eine teilweise Draufsicht auf den Gegenstand von Figur 1,
- Figur 3: einen Vertikalschnitt analog Figur 1 mit einem zweiten Ausführungsbeispiel einer Befestigungseinrichtung,
- Figur 4: einen teilweisen Horizontalschnitt und eine teilweise Draufsicht auf den Gegenstand von Figur 3,
- Figur 5: den Gegenstand der Figuren 1 und 2 bei seiner Montage an einer senkrechten Befestigungsfläche nach Ausrichtung der optischen Achse parallel zur Befestigungsfläche,
- Figur 6: einen Gegenstand analog der Figuren 3 und 4 bei seiner Montage auf einer waagerechten Befestigungsfläche nach Ausrichtung der optischen Achse um mehr als 90° nach unten,
- Figur 7: den Gegenstand nach Figur 6 bei seiner Montage unter einer waagerechten Befestigungsfläche nach Ausrichtung der optischen Achse um weniger als 90° nach unten,
- Figur 8: das linke Ende von Figur 1 in vergrößertem Maßstab,
- Figur 9: den Gegenstand von Figur 8 in Explosionsdarstellung,
- Figur 10: einen Gegenstand analog Figur 1, jedoch mit einer zusätzlichen Drehfassung an der Rückwand des Schutzgehäuses,
- Figur 11: eine Draufsicht auf den Gegenstand von Figur 10,
- Figur 12: den Gegenstand der Figuren 10 und 11 in einer Darstellung analog Figur 6,
- Figur 13: eine vergrößerte Schnitt-Darstellung der zweiten, an der Rückwand angeordneten Drehfassung,
- Figur 14: eine Explosionsdarstellung einer Befestigungseinrichtung nach einem dritten Ausführungsbeispiel zwischen einer Befestigungsfläche und dem Schutzgehäuse,
- Figur 15: die Hälfte eines Spannmittels in Form eines Halbringes mit Blickrichtung auf die Trennfuge,
- Figur 16: eine Draufsicht auf den Gegenstand von Figur 15 in Richtung der Achse A-A in Figur 14,
- Figur 17: einen Axialschnitt durch eines der Gelenkglieder mit Teilkugelschale mit Blickrichtung parallel zur zweiten bzw. dritten Schwenkachse entlang der Ebene E17 in Figur 18,
- Figur 18: einen Axialschnitt durch den Gegenstand nach Figur 17 entlang der Ebene E18 in Figur 17 und entlang der sich rechtwinklig kreuzenden ersten und zweiten Schwenkachsen,
- Figur 19: eine Rückansicht eines der innerhalb der Teilkugelschalen angeordneten Druckkörpers in Richtung der Achse A-A in Figur 14,
- Figur 20: eine Ansicht des Gegenstandes von Figur 17 in Richtung des Pfeils P20 in Figur 17,
- Figur 21: den Gegenstand von Figur 14 in geradlinig montiertem Zustand,
- Figur 22: den Gegenstand von Figur 21 in einer der möglichen Justierstellungen,
- Figuren 23a bis 23i: in stark verkleinertem Maßstab das Schutzgehäuse in verschiedenen möglichen Justierstellungen, nämlich:

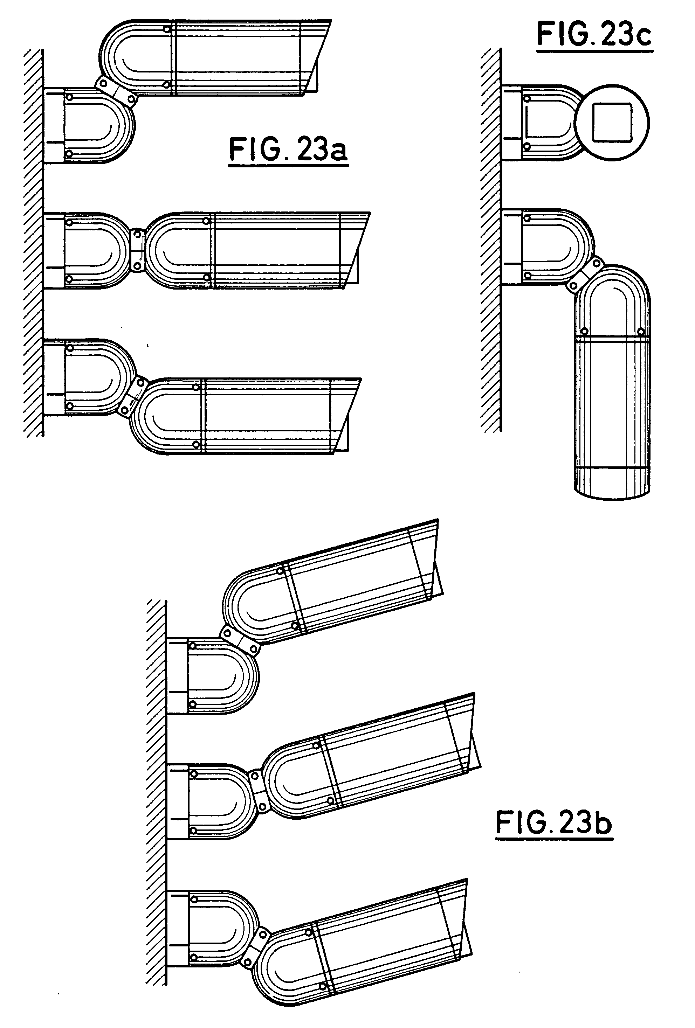

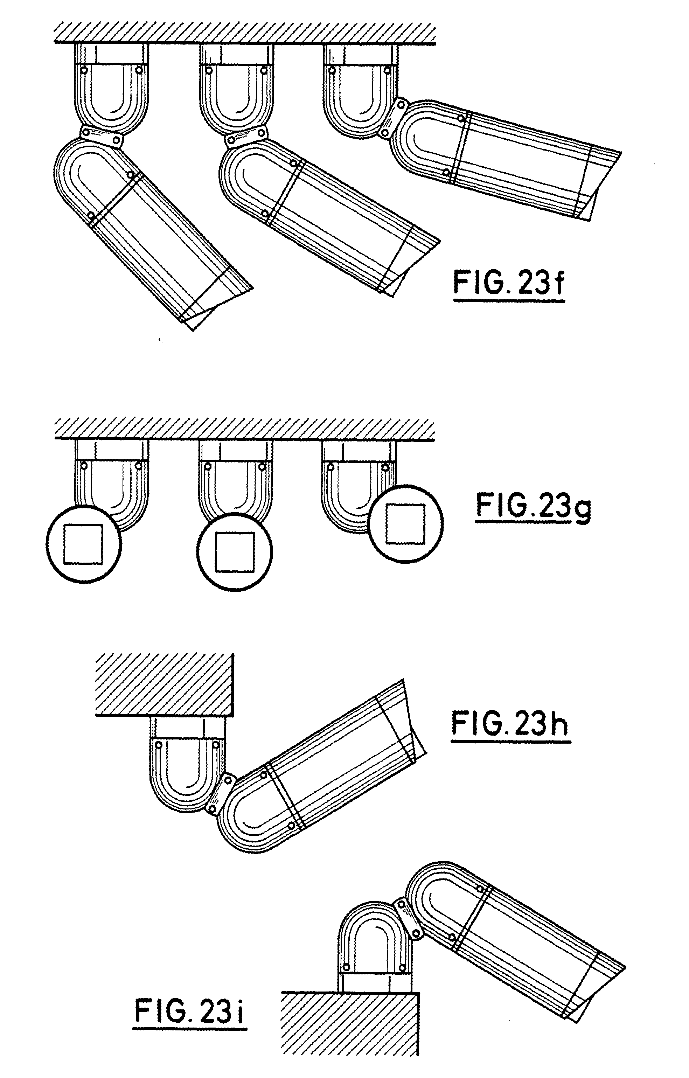

- Figur 23a: bei einer Wandmontage mit waagrecht ausgerichteten optischen Achsen,
- Figur 23b: bei einer Wandmontage mit schräg nach oben ausgerichteten optischen Achsen,
- Figur 23c: bei einer Wandmontage mit parallel zur Wand ausgerichteten optischen Achsen,

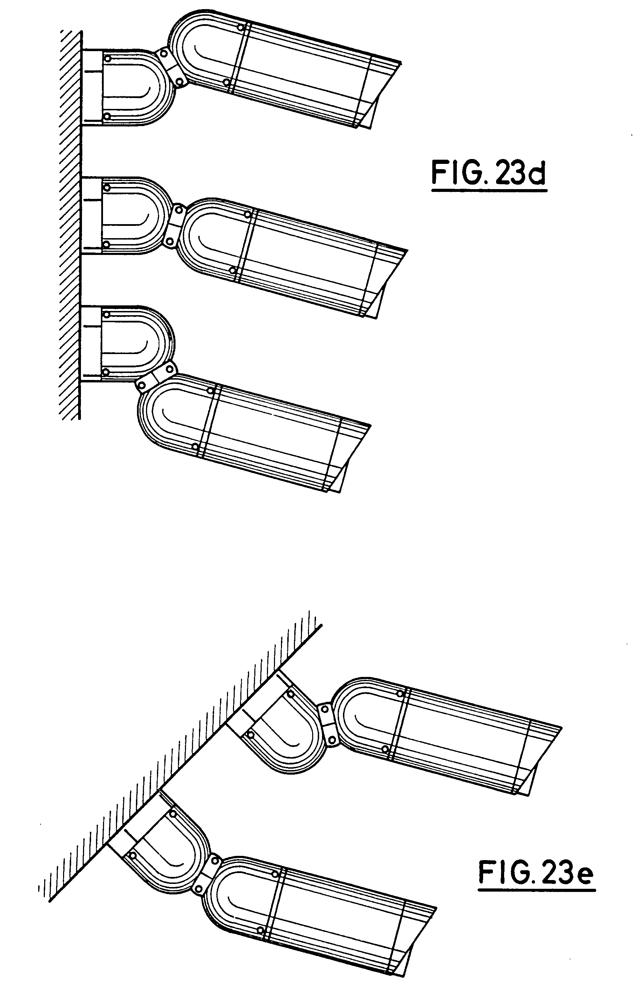

- Figur 23d: bei einer Wandmontage mit schräg nach unten ausgerichteten optischen Achsen,
- Figur 23e: bei einer Montage an einer schrägen Decken- bzw. Dach-Innenfläche,
- Figur 23f: bei einer Montage unterhalb einer waagrechten Deckenfläche mit schräg nach unten ausgerichteten optischen Achsen,
- Figur 23g: bei einer Montage unterhalb einer waagrechten Deckenfläche mit auf den Betrachter zu gerichteten und parallel zur Deckenfläche ausgerichteten optischen Achsen,
- Figur 23h: bei einer Montage unterhalb einer waagrechten Fläche eines Deckenbalkens mit Blickrichtung nach schräg oben,
- Figur 23i: bei einer Montage auf einer waagrechten Fläche eines Flachdaches oder eines Simses mit Blickrichtung nach schräg unten, und

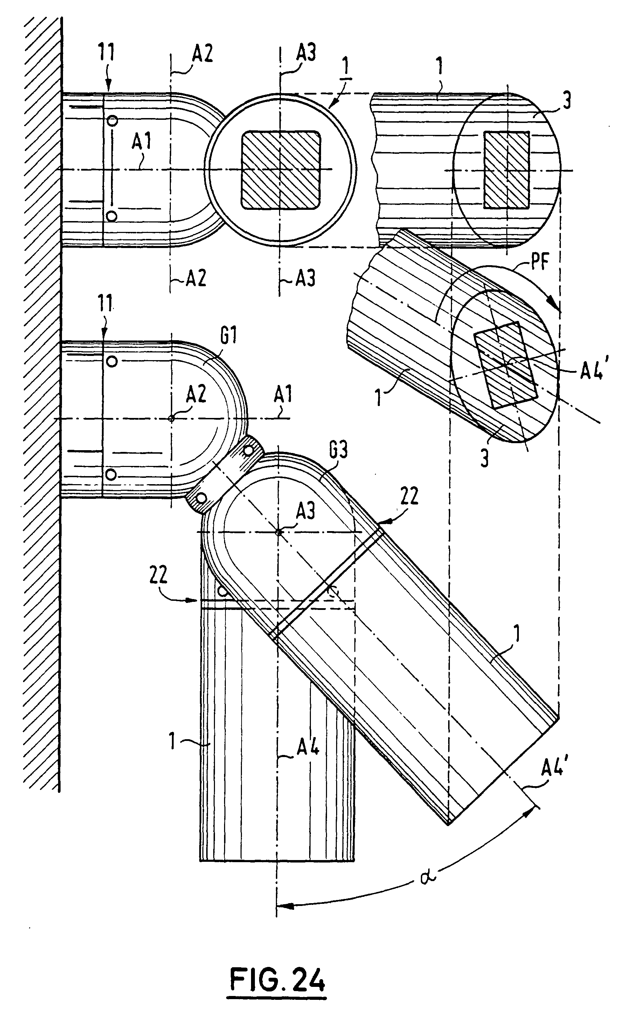

- Figur 24: eine Modifikation der Figur 23c in wiederum vergrößertem Maßstab zur Erläuterung der Beseitigung einer Schiefstellung des Videobildes durch eine zweite Drehfassung.

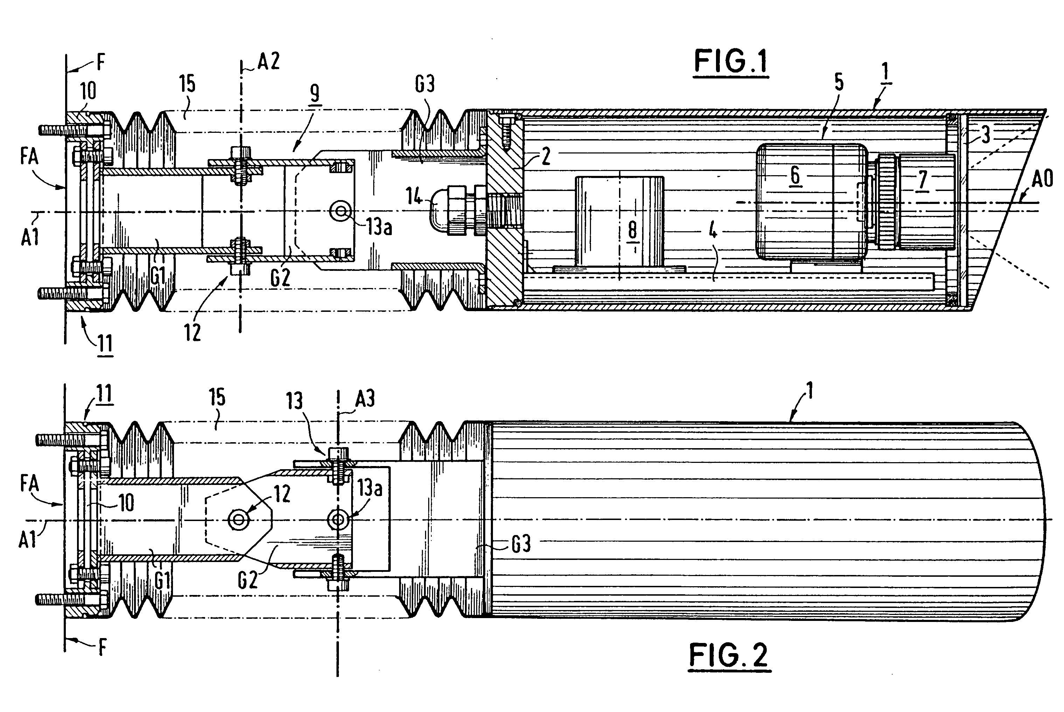

In den Figuren 1 bis 7 und 10 bis 12 ist ein Schutzgehäuse 1 dargestellt, das bevorzugt aus einem Abschnitt eines LeichtmetallStrangprofils oder auch aus einem Abschnitt eines Kunststoffrohrs besteht, wobei der Querschnitt nahezu beliebig gewählt werden kann, z.B. kreisringförmig, polygonal oder auch mit ebenen Seitenwänden, nach unten gewölbtem Boden und nach oben gewölbter Decke. Ein solches Schutzgehäuse kann weiterhin zusätzlich mit einem sogenannten Dach versehen werden. An beiden Enden ist das Schutzgehäuse unter Zwischenschaltung nicht näher hervorgehobener Dichtungselemente durch eine Rückwand 2 und durch eine Fensterwand 3 verschlossen. An der Rückwand 2 ist auf der Innenseite eine Tragschiene 4 befestigt, die sich bis in die Nähe der Fensterwand 3 erstreckt und an ihrem vorderen Ende ein optisches Gerät 5 in Form einer Videokamera 6 mit einem Objektiv 7 trägt. Hierdurch wird eine optische Achse AO definiert. Auf der Tragschiene 4 befindet sich weiterhin ein Elektronikbaustein 8, der hier nur von sekundärem Interesse ist.

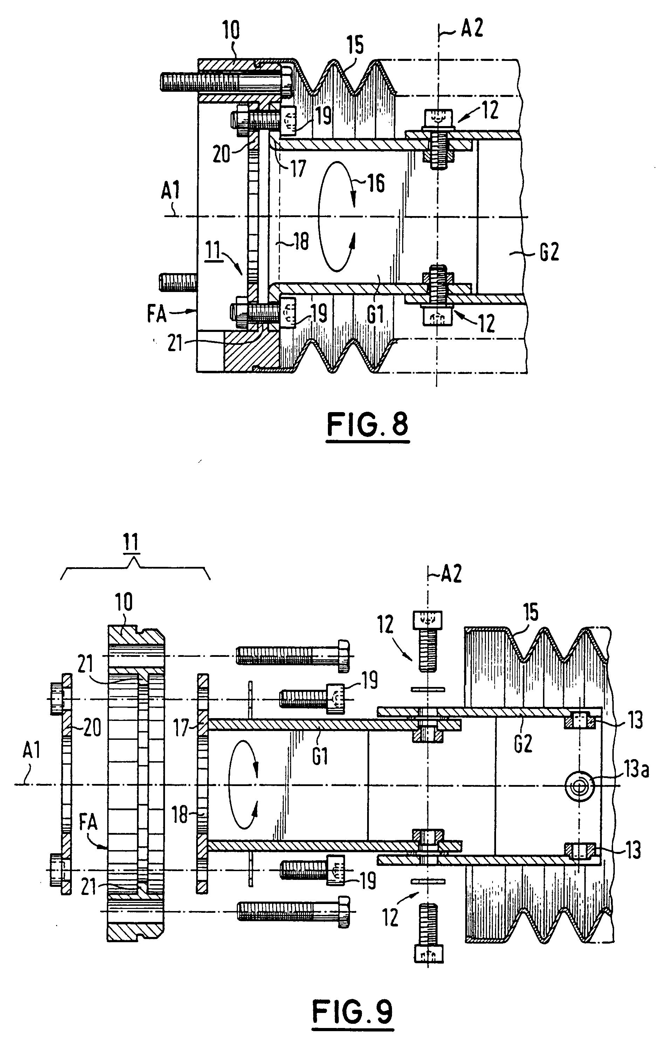

Von der Mitte der Rückwand 2 geht eine Befestigungseinrichtung 9 aus, die in einem Haltekörper 10 endet, der eine Anlagefläche FA für das Anbringen an einer Befestigungsfläche F aufweist, die im vorliegenden Falle eine senkrechte Wandfläche ist. Der Haltekörper 10 besitzt eine feststellbare Drehfassung 11, die anhand von Figur 8 noch näher erläutert werden wird.

Der Haltekörper 10 bzw. dessen Drehfassung 11 definiert eine erste Schwenkachse A1, die senkrecht zur Anlagefläche FA verläuft, wie dies aus den Figuren 1 und 2 ersichtlich ist. Die erste Schwenkachse A1 ist konzentrisch von einem ersten Gelenkglied G1 umgeben, das im vorliegenden Falle als Vierkantrohr ausgebildet ist und von der Drehfassung 11 gehalten wird. An dem der Drehfassung 11 abgekehrten Ende ist das Gelenkglied G1 mit einer zweiten Schwenkachse A2 versehen, an der mittels zweier Feststellschrauben 12 ein zweites Gelenkglied G2 angelenkt ist, das auf dem größten Teil seiner Länge gleichfalls aus einem Vierkantrohr besteht. Wie in den Figuren 1 und 2 gezeigt, ist das Gelenkglied G2 im Bereich der Schwenkachse A2 auf zwei gegenüberliegenden Seiten ausgeschnitten, so daß die Gelenkglieder G1 und G2 um die Schwenkachse A2 frei beweglich, aber feststellbar sind.

Das der zweiten Schwenkachse A2 abgekehrte Ende des zweiten Gelenkgliedes G2 trägt die dritte Schwenkachse A3, die durch Feststellschrauben 13 gebildet wird. Die beiden Schwenkachsen A2 und A3 stehen senkrecht zueinander und zur ersten Schwenkachse A1, wodurch sich eine Art räumlich auseinandergezogenes Kardangelenk ergibt. Feststellschrauben 13 und 13a sind durch Anbringung von Muttern, die um 90° versetzt angeordnet sind, alternativ um 90° umsetzbar, so daß die Schwenkachsen A2 und A3 auch parallel zueinander verlaufen können, wenn das Gelenkglied G3 entsprechend umgesetzt wird.

Von der Rückwand 2 erstreckt sich in Richtung auf den Haltekörper 10 ein drittes Gelenkglied G3, das gleichfalls als Vierkantrohr ausgebildet und auf gegenüberliegenden Seiten im Bereich der Schwenkachse A3 ausgeklinkt ist, so daß sich ein hinreichend großer Schwenkwinkel ergibt. Das dritte Gelenkglied G3 ist mit der Rückwand 2 fest verbunden.

Bei gestreckter Lage aller Gelenkglieder G1, G2 und G3 - wie in den Figuren 1 und 2 dargestellt - ergibt sich im Innern der Gelenkglieder ein geradlinig verlaufender Kabelkanal, in dem ein Anschlußkabel verlegt werden kann, das in an sich bekannter Weise über eine Kabeleinführung 14 in das innere des Schutzgehäuses 1 eingeführt wird. Der Übersichtlichkeit halber ist der Kabelverlauf nicht näher dargestellt.

Wie weiterhin aus den Figuren 1 und 2 ersichtlich, sind die Gelenkglieder G1, G2 und G3 im gesamten Bereich zwischen der Rückwand 2 und dem Haltekörper 10 von einem Faltenbalg 15 umgeben, der aus Montagegründen lösbar mit der Rückwand 2 und dem Haltekörper 10 verbunden ist. In gelöstem Zustand läßt sich der Faltenbalg 15 auf einen Bruchteil seiner Länge zusammenschieben, so daß er die Montage und die räumliche Justage des Schutzgehäuses 1 nicht behindert.

Es ergibt sich aus den Figuren 1 und 2, daß das Schutzgehäuse 1 um die waagerechte Schwenkachse A3 in einer vertikalen Ebene und um die Schwenkachse A2 in einer horizontalen Ebene verschwenkt werden kann, und zwar um Schwenkwinkel, die praktisch nicht begrenzt sind. Nach dem Einstellen der vorgegebenen Raumlage der optischen Achse AO werden die Feststellschrauben 12 und 13 angezogen, so daß das Schutzgehäuse 1 praktisch schwingungsfrei gehalten wird. Durch das räumliche Auseinanderziehen der Schwenkachsen A2 und A3 wird auch verhindert, daß das eingezogene Kabel innerhalb eines kurzen Abstandes gebogen wird, was bei häufiger Neueinstellung die Lebenserwartung des Kabels merklich verkürzt. Durch die gleiche Maßnahme wird auch die Lebensdauer des Faltenbalges 15 verlängert.

Die Bewegung um die Schwenkachsen A2 und A3 gewährleistet, daß die Videokamera 6 nicht um die optische Achse AO verdreht wird; für eine Wandbefestigung ist also ein Verschwenken um die erste Schwenkachse A1 nicht erforderlich. Die Schwenkachse A1 erhält aber erhebliche Bedeutung, wenn die Befestigungsfläche F beispielsweise eine Deckenfläche ist, worauf weiter unten noch näher eingegangen wird.

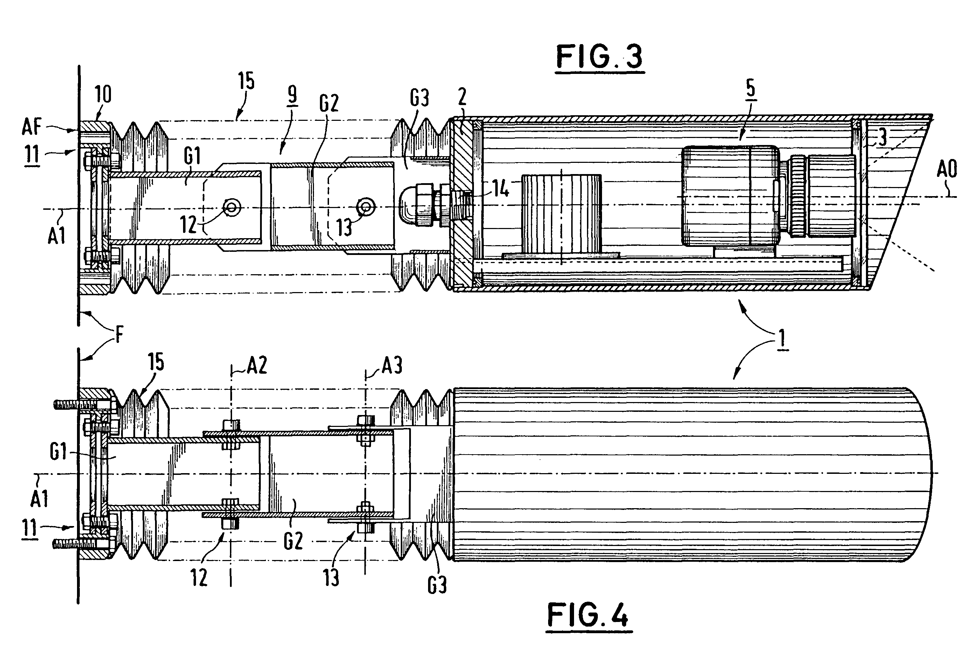

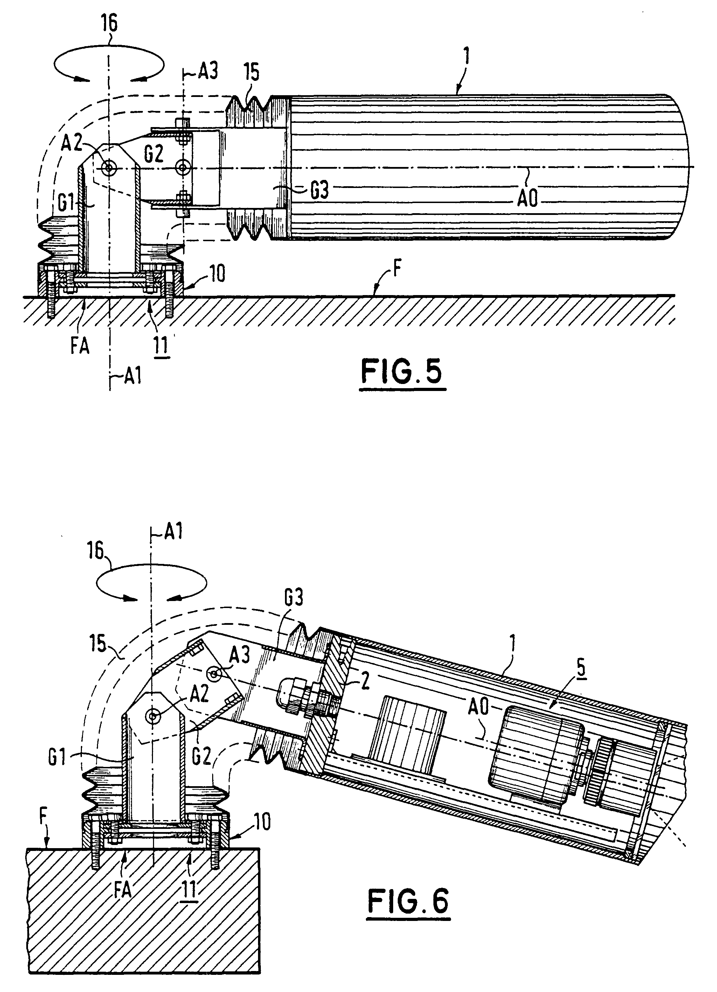

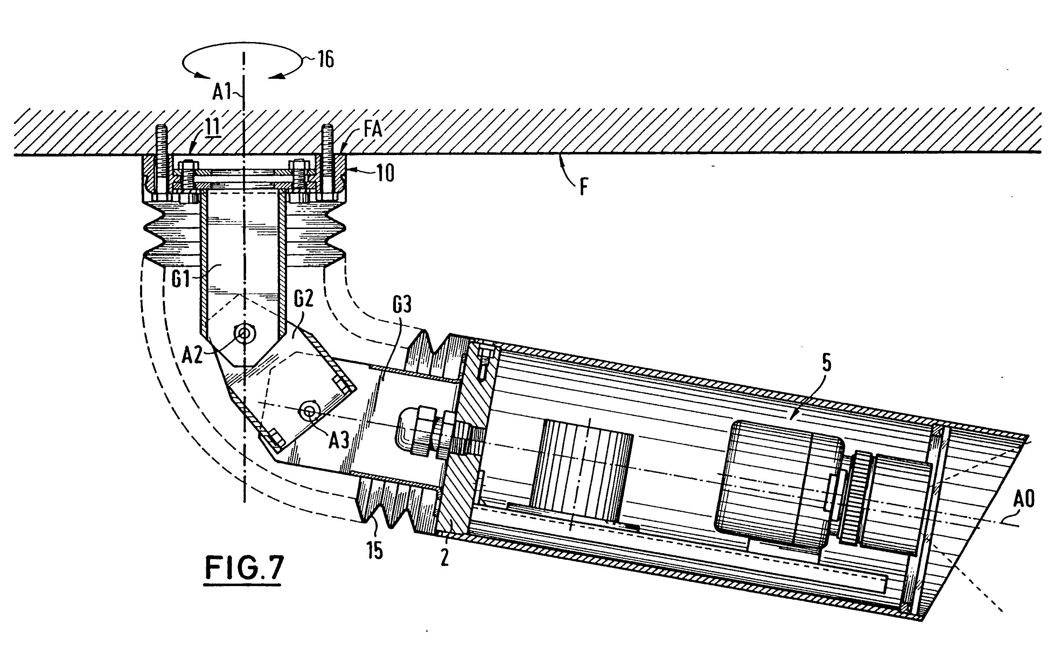

Bei dem zweiten Ausführungsbeispiel nach den Figuren 3 und 4 verlaufen die zweite und die dritte Schwenkachse A2 bzw. A3 parallel zueinander, aber wiederum senkrecht zur ersten Schwenkachse A1. Daraus ergibt sich die Möglichkeit eines großen Schwenkwinkels des Schutzgehäuses 1 bei nur geringer örtlicher Krümmung des Kabelkanals bzw. des Faltenbalges 15, was anhand der Figuren 6 und 7 weiter unten noch näher erläutert werden wird.

Figur 5 zeigt eine Befestigungsmöglichkeit des Gegenstandes nach den Figuren 1 und 2 an einer Befestigungsfläche F, die gleichfalls eine senkrechte Wandfläche ist. Sofern dabei die optische Achse AO um die zweite Schwenkachse A2 um 90° herumgeschwenkt wird und dadurch parallel zur Befestigungsfläche F verläuft, kann die optische Achse AO in einer zur Befestigungsfläche F parallel verlaufenden Ebene verschwenkt werden, und zwar entsprechend dem Doppelpfeil 16. In einem solchen Fall kann auf die dritte Schwenkachse A3 verzichtet werden, wodurch sich eine äußerst kurze Baulänge der Befestigungseinrichtung 9 bei großem Schwenkwinkel ergibt. Die dritte Schwenkachse A3 schafft aber bei senkrecht stehender Achse A2 die Möglichkeit, die optische Achse AO gegenüber der Fläche F beliebig zu verschwenken und dennoch zu neigen, ohne daß sich das Bild einer Video-Kamera schief stellt.

Die Figuren 6 und 7 zeigen nun Möglichkeiten, für die insbesondere die Ausführungsbeispiele nach den Figuren 3 und 4 sowie 10 und 11 geeignet sind. Bei dem in Figur 6 dargestellten Fall ist der Haltekörper 10 auf einer Befestigungsfläche F verschraubt, die beispielhaft die waagrechte Oberseite eines Trägers oder eine Dachfläche sein kann. Von hier aus läßt sich das Schutzgehäuse 1 mit der optischen Achse AO aus der Richtung der ersten Schwenkachse A1 um deutlich mehr als 90° in die gezeichnete Position bewegen. Um hierbei die optische Achse AO in allen erforderlichen Raumkoordinaten verschwenken zu können, wird die gesamte Anordnung nach einem Lösen der Drehfassung 11 um die erste Schwenkachse A1, die in diesem Falle senkrecht steht, verschwenkt, so daß die optische Achse AO alle erforderlichen Raumkoordinaten erreichen kann, ohne daß sich das Bild schief stellen würde.

Die umgekehrte Anordnung zeigt Figur 7: In diesem Falle ist der Haltekörper 10 an einer Befestigungsfläche F festgeschraubt, die die Unterseite einer Geschoßdecke ist, also waagerecht verläuft. Auch in diesem Falle wird das Schutzgehäuse 1 aus einer Position heraus verschwenkt, die durch die erste Schwenkachse A1 vorgegeben ist, und zwar in diesem Falle um weniger als 90°. Durch Verschwenken um die erste Schwenkachse A1, die auch in diesem Falle senkrecht zur Anlagefläche FA verläuft, lassen sich alle erforderlichen Raumkoordinaten für die optische Achse AO erreichen, ohne daß sich das Bild hierbei schief stellt.

In den Figuren 8 und 9 sind gleiche Teile wie bisher mit gleichen Bezugszeichen versehen. Das erste Gelenkglied G1 ist an einer drehbaren Flanschplatte 17 befestigt, die die Form eines Kreisringes hat und eine Mittenöffnung 18 zum Hindurchführen eines Kabels aufweist. Über einen Kranz von Schrauben 19 ist die Flanschplatte 17 mit einer kongruenten Gegenplatte 20 verbunden. Flanschplatte 17 und Gegenplatte 20 schließen einen radialen Ringflansch 21 zwischen sich ein, der Teil des Haltekörpers 10 ist. Die Teile 17, 20 und 21 bilden die bereits beschriebene Drehfassung 11, deren Lösen und Feststellen durch die Schrauben 19 bewirkt wird. Dadurch läßt sich die Befestigungseinrichtung 9 und mit ihr das Schutzgehäuse 1 in bezug auf die erste Schwenkachse A1 stufenlos verstellen und arretieren.

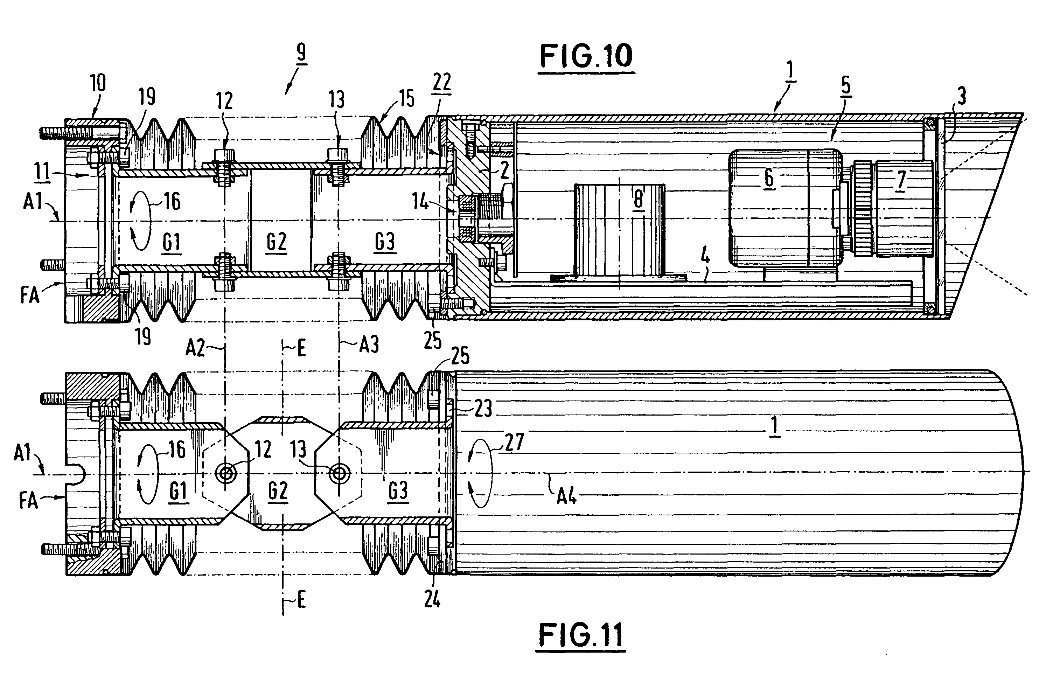

Das Schutzgehäuse 1 nach den Figuren 10 bis 13 besitzt eine weitere Schwenkachse A4 zur relativen Verdrehung des Schutzgehäuses 1 gegenüber dem Haltekörper 10 und den Gelenkgliedern G1, G2 und G3. Die Schwenkachse A4 durchdringt die Rückwand 2 virtuell und verläuft parallel zur optischen Achse AO.

Zu diesem Zweck besitzt die Rückwand 2 des Schutzgehäuses 1 eine weitere feststellbare Drehfassung 22, in die das letzte Gelenkglied G3, das die letzte Schwenkachse A4 mindestens teilweise umschließt, mittels eines weiteren, drehbaren Ringflansches 23 eingreift. Die Schwenkachsen A2 und A3 verlaufen parallel zueinander und stehen senkrecht im Raum, so daß die optische Achse AO zunächst einmal waagerecht im Raum verschwenkt werden kann. Die Anordnung ist spiegelsymmetrisch zu einer Ebene E-E ausgebildet, wie Figur 11 zeigt, so daß die Drehfassungen 11 und 22 und die Gelenkglieder G1 und G2 zumindest überwiegend aus den gleichen Bauteilen aufgebaut sind.

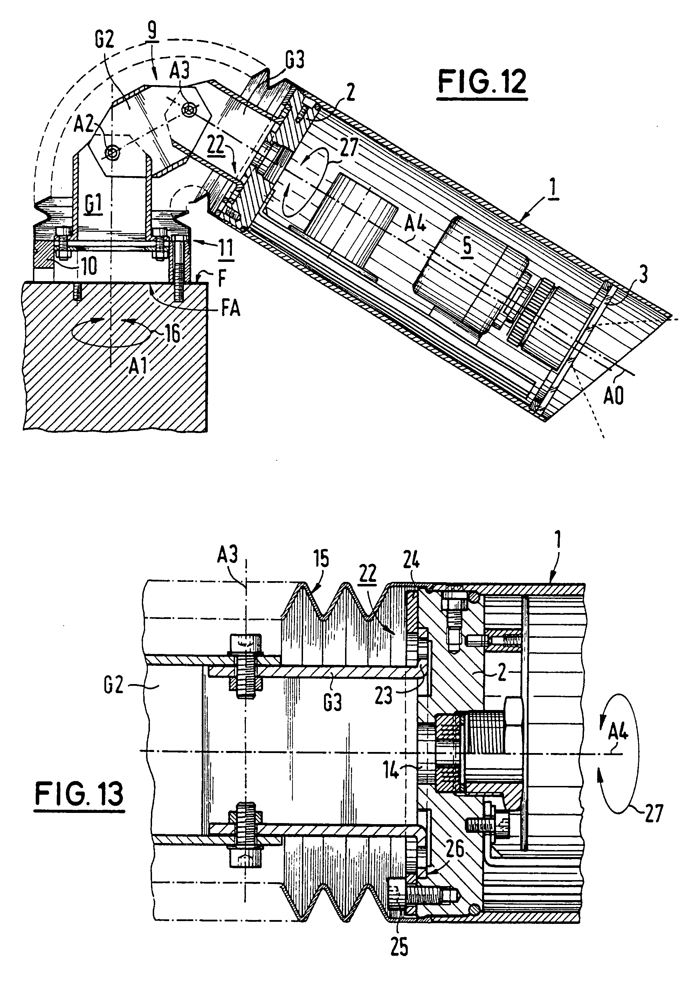

Die Schwenkachsen A2 und A3 lassen sich nun mittels der Drehfassungen 11 und 22 um die Schwenkachsen A1 und A4 um 90 ° im Raum verstellen und gelangen dadurch in die waagerechte Lage nach Figur 12, wodurch sich das Schutzgehäuse relativ zu einer waagerechten Befestigungsfläche F (z.B. Deckenfläche) verstellen läßt. Dabei wird für den Faltenbalg 15 ein großer Biegeradius erreicht, was insbesondere Figur 12 zeigt.

Figur 13 zeigt noch, daß in der Rückwand 2 eine Vertiefung mit einer Schulterfläche 26 angeordnet ist, gegen die der Ringflansch 23 mittels der Gegenplatte 24 und der Schrauben 25 anpreßbar und damit feststellbar ist.

Bei den Ausführungsbeispielen nach den Figuren 3, 4, 6, 7, 10, 11 und 12 können die beiden parallelen Schwenkachsen A2 und A3 auch durch eine einzige Schwenkachse ersetzt werden, was für eine Befestigung des Haltekörpers 10 an einer waagrechten Fläche völlig ausreichend wäre, um alle Raumkoordinaten erfassen zu können. Lediglich die Krümmung der Kabel würde hierdurch verschärft. Bei einer Befestigung an nicht waagrechten Flächen, würden sich jedoch in manchen Fällen die Bildränder schief stellen, worauf bereits weiter oben hingewiesen wurde. Hier schafft nun die zweite Drehfassung 22 zwischen dem letzten Gelenkglied und dem Schutzgehäuse 1 Abhilfe, wie sie beispielhaft anhand der Figuren 10 und 13 eingehend erläutert wird. Selbstverständlich läßt sich auch die Rückwand 2 in den Figuren 1 bis 7 und 12 mit einer solchen Drehfassung 22 oder mit einer Drehfassung 11 nach den Figuren 8 und 9 ausstatten bzw. kombinieren, so daß in allen Fällen ein Universalgerät vorliegt. Der Effekt wird nachstehend anhand der Figur 24 noch eingehend erläutert.

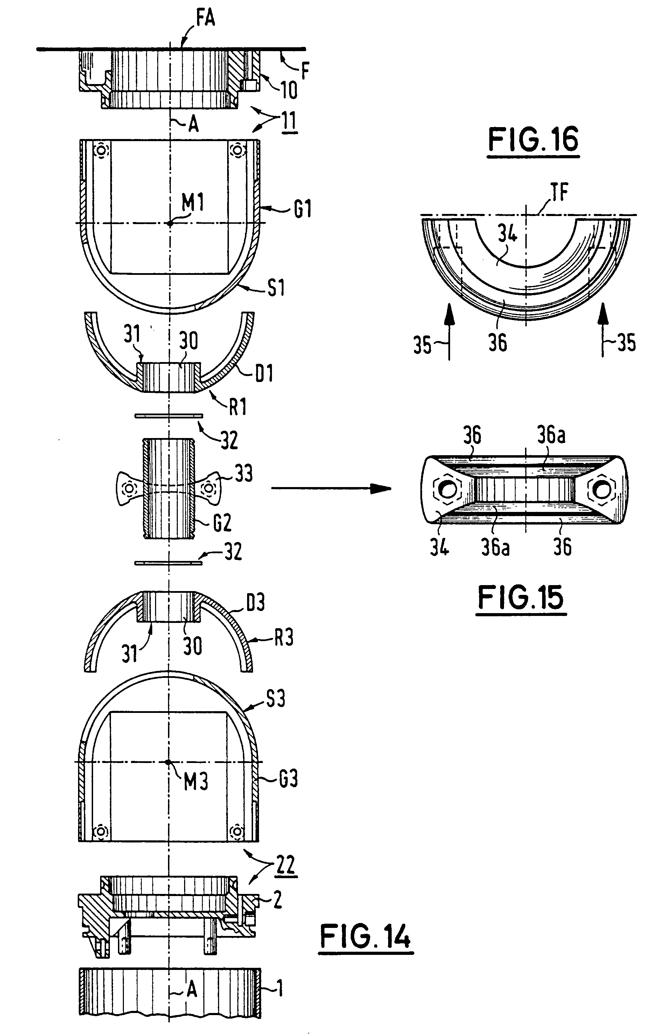

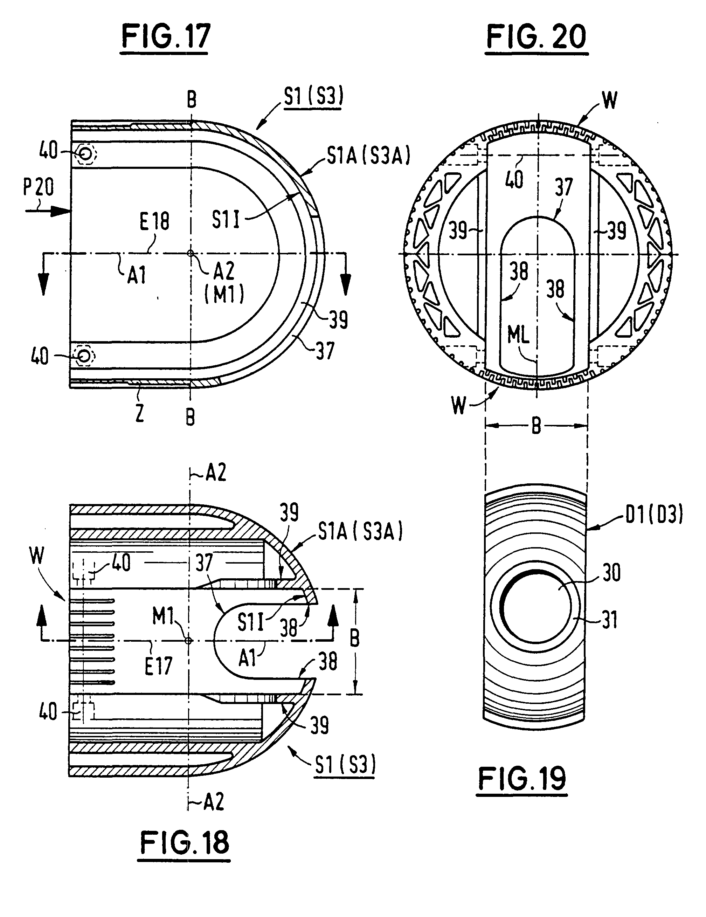

In Figur 14 ist - im Zusammenhang mit dem dritten Ausführungsbeispiel - eine Befestigungsfläche F gezeigt, mit der die Anlagefläche FA eines Haltekörpers 10 verschraubt ist. Mit diesem bildet ein erstes Gelenkglied G1 beim Zusammenbau eine erste Drehfassung 11. Das Gelenkglied G1 besitzt eine Teilkugelschale S1 und wird anhand der Figuren 17 bis 20 noch näher beschrieben.

Ein Druckkörper D1 besitzt eine äußere Rotationsfläche R1 und eine Bohrung 30, die von einem Kragen 31 umgeben ist, und befindet sich in montiertem Zustand innerhalb des Gelenkgliedes G1, wobei die Krümmungsradien der Berührungsflächen übereinstimmen.

Am jenseitigen Ende der Achse A-A ist das Ende eines Schutzgehäuses 1 dargestellt, in das eine Rückwand 2 eingesetzt wird. Darüber ist - in spiegelsymmetrischer Anordnung zum Gelenkglied G1 - ein drittes Gelenklied G3 dargestellt, das mit dem Gelenkglied G1 baugleich ist und eine Teilkugelschale S3 besitzt. Das Gelenkglied G3 bildet in montiertem Zustand mit der Rückwand 2 eine weitere feststellbare Drehfassung 22. Auch ein weiterer Druckkörper D3 mit einer Rotationsfläche R3 ist baugleich mit dem Druckkörper D1. Die Druckkörper D1 und D3 sind bügelförmig ausgebildet, was auch aus Figur 19 hervorgeht. Die Rotationsflächen R1 und R3 sind also gewissermaßen Kugelausschnitte mit Teilumfang.

Durch die Bohrungen 30 ist in montiertem Zustand ein zweites Gelenkglied G2 hindurchgesteckt, das als geradliniger Hohlkörper ausgeführt ist und jenseits der Kragen 31 durch Sicherungsringe 32 zugfest gehalten wird. Der Querschnitt kann hohlzylindrisch aber auch als Vierkantrohr ausgeführt sein; zeichnerisch dargestellt ist ein kurzer Rohrabschnitt. Bei Verwendung eines Vierkantrohres muß die Bohrung 30 einen komplementären Querschnitt erhalten, wodurch ein Freiheitsgrad der Beweglichkeit (Drehung gegenüber den Druckkörpern D1 und D2) verloren geht, was aber durch die Drehfassungen 11 und/oder 22 ausgeglichen wird.

Zwischen den Teilkugelschalen S1 und S3 befindet sich ein Spannmittel 33 in Form eines axial geteilten Druckstücks, das aus zwei Halbringen 34 besteht, von denen in den Figuren 15 und 16 nur einer dargestellt ist. Durch eine Trennfuge TF (Figur 16) ist ein radialer Spalt entstanden, der ein radiales Zusammenziehen der beiden Halbringe 34 gegen das Gelenkglied G2 erlaubt. Die hierfür erforderlichen Spannschrauben 35 sind durch Pfeile dargestellt. Die Halbringe 34 besitzen in spiegelsymmetrischer Anordnung konkave Druckflächen 36, die - zumindest am Außenrand des Druckstücks - der Außenform der Teilkugelschalen S1 und S2 angepaßt sind. In dem weiter innen liegenden Bereich 36a sind die Oberflächen etwas zurückgesetzt.

Dadurch lassen sich die Druckkörper D1 und D3 gegen die Teilkugelschalen S1 und S3 und gegen das Druckstück verspannen. Wegen des relativ großen Durchmessers und der Keilwirkung der Halbringe 34 lassen sich erhebliche Klemmkräfte erzeugen, die die Gelenkglieder G1, G2 und G3 nach der Justage kraftschlüssig und zuverlässig gegeneinander fixieren. Die Verhältnisse können durch einen Reibbelag oder eine Aufrauhung noch verbessert werden.

Anhand der Figuren 17 bis 20 ist gezeigt, daß die Teilkugelschalen S1 und S3 Außenflächen S1A und S3A besitzen, die in montiertem Zustand aufeinander zu gerichtet sind, sowie hierzu konzentrische Innenflächen S1 | und S3|, an die sich die Druckkörper D1 und D3 anlegen. In den Teilkugelschalen S1 und S3 befindet sich je eine schlitzförmige, von parallelen Kanten 38 begrenzte Durchbrechung 37, deren Mittenlinie ML sich auf einem Großkreis etwa von der Achse bis zum Rand der Teilkugelschalen S1 und S3 erstreckt. In diesen Drehbrechungen können die Kragen 31 mit dem mittleren Gelenkglied G2 um die Mittelpunkte M1 und M3 der Teilkugelschalen entsprechend weit verschwenkt werden. Damit sich die Druckkörper D1 und D3 gegenüber den Gelenkgliedern G1 und G3 nicht um die Achsen der Bohrungen 30 verschwenken können, sind auf den Innenflächen S1| und S3| Rippen 39 angeordnet, die parallel zu den Kanten 38 verlaufen. Der lichte Abstand der Rippen 39 entspricht der Breite B der Druckkörper D1 und D3, was sich aus einer Zusammenschau der Figuren 19 und 20 ergibt.

Im Ergebnis können die Rotationsflächen R1 und R3 und die Innenflächen S1| und S3| gleichermaßen als Teilkugelflächen ausgebildet sein, was die Steifigkeit der Druckkörper fördert. Die Rotationsflächen R1 und R und die Innenflächen S1| und S3| können zwischen den Rippen 39 auch als Zylinder- oder Kegelstumpfflächen ausgebildet sein. In jedem Falle aber übergreifen die Druckkörper D1 und D3 den Umfangsrand der Durchbrechungen 37 zumindest teilweise, um eine ausreichende mechanische Abstützung zu gewährleisten. Ein vollständiger Verschluß in jeder relativen Lage ist jedoch vorzuziehen.

Dadurch erübrigt sich auch der in den Figuren 1 bis 13 gezeigte Faltenbalg 15. Es entsteht ein vollkommen gekapseltes Haltesystem mit extrem glatten Oberflächen, sowohl als Schutz gegen Sabotage als auch gegen Witterungseinflüsse.

Wie sich weiterhin aus den Figuren 17 und 18 ergibt, reichen die Teilkugelflächen S1 und S3 bis zu je einer Basisfläche B-B, die durch den Mittelpunkt M1 bzw. M3 verläuft und die durch den Durchmesser definiert wird. Bis nahezu zu dieser Basisfläche reicht auch das eine Ende der schlitzförmigen Durchbrechung 37. Von dieser Basisfläche B-B ausgehend sind die Teilkugelschalen S1 und S3 durch einen hohlzylindrischen Abschnitt Z verlängert, mit dem sie dann in die jeweilige Drehfassung 11 bzw. 22 eingreifen. Zum Zwecke einer Feststellung bzw. Arretierung ist das Ende des Abschnitts Z elastisch und verspannbar ausgebildet, und zwar entweder durch Schlitzung oder - wie dargestellt - durch eine wellenförmige Gestaltung W an zwei diametral gegenüberliegenden Stellen des Umfangs. Bohrungen 40 dienen zum Hindurchführen von nicht näher dargestellten Spannschrauben.

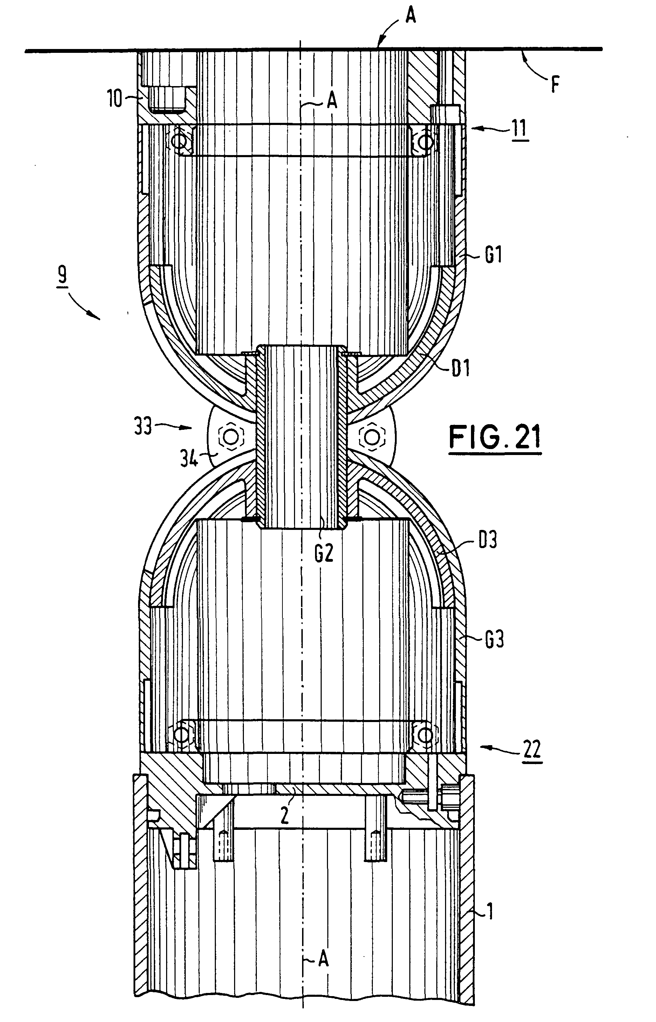

Figur 21 zeigt die gesamte Befestigungseinrichtung 9 in der gestreckten Lage. Das zweite Gelenkglied G2 ist hierbei an die achsenseitigen Enden der beiden Durchbrechungen 37 angestoßen. In diesem Zustand lassen sich nicht dargestellte Kabel für die Stromversorgung der Elektronik, die Beheizung der Frontscheibe und für die Übertragung der Fernsehsignale von der Befestigungsfläche F bis zur Rückwand 2 entlang der Achse A-A einführen.

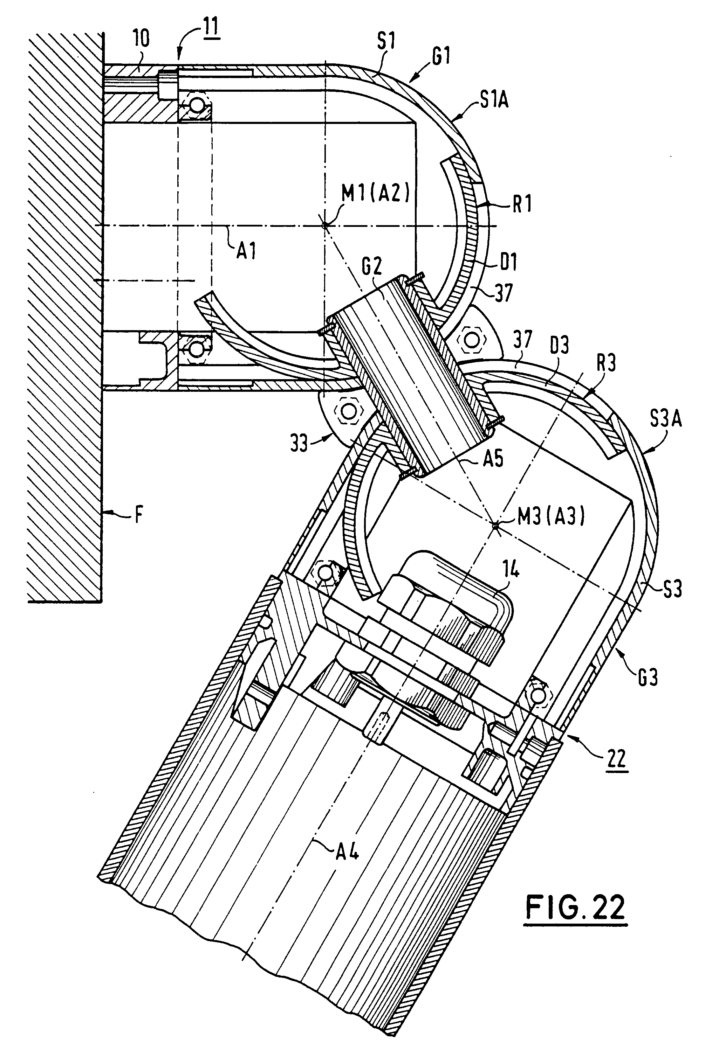

Figur 22 zeigt die gesamte, an einer senkrechten Befestigungsfläche F (Wandfläche) angebrachte, Anordnung nach Justage in einer Extremstellung, bei der der Schwenkwinkel - ausgehend von der gestreckten Lage nach Figur 21 - 120° beträgt. Hierbei ist das zweite Gelenkglied G2 an die achsenfernen Enden der beiden Durchbrechungen 37 angestoßen. Die - nicht dargestellten - Kabel können hierbei gut abgerundet bis zur Kabeleinführung 14 verlaufen, werden also nicht scharfkantig geknickt.

Die Schwenkachsen A1, A2, A3 und A4 sind keine körperlichen Achsen, sondern mathematische Achsen. Die erste Schwenkachse A1 wird durch die Drehfassung 11 gebildet. Die zweiten und dritten Schwenkachsen A2 und A3 stehen senkrecht zur Zeichenebene und werden durch die vorgeschriebenen Schwenkwege des zweiten Gelenkgliedes G2 in den Teilkugelschalen S1 und S3 entlang der beiden Mittenlinien ML der Durchbrechungen 37 definiert, die parallel zur bzw. in der Zeichenebene verlaufen.

Sofern das zweite Gelenkglied G2 ein rundes Rohr ist, können die beiden Gelenkglieder G1 und G3 zueinander zusätzlich um die Schwenkachse A5 verschwenkt werden, die durch die Mittelpunkte M1 und M3 der Teilkugelschalen S1 und S3 verläuft. Durch die kombinatorische Wirkung der Schwenkachsen A1, A2, A3 und A5 kann die optische Achse einer Videokamera praktisch jeden Ort des Raumes vor der Fläche F erreichen. Ist das zweite Gelenkglied G2 ein Vierkantrohr, so ist ein Schwenken um die Achse A5 nicht möglich. Hier kommt nun die Wirkung der zweiten Drehfassung 22 zum Tragen, so daß durch die kombinatorische Wirkung der Achsen A1, A2, A3 und A4 der gleiche Effekt erzielt wird.

In den beiden vorstehend beschriebenen Fällen kann eine Schiefstellung des Bildes der Kamera bzw. der Fensterränder der Fensterwand bei der Montage und Justage und natürlich auch zu jedem späteren Zeitpunkt bei einer Neuorientierung des Schutzgehäuses kompensiert bzw. ausgeglichen werden, so daß auf dem Bildschirm bzw. Monitor stets ein Bild mit waagrechten und senkrechten Bildrändern erscheint.

Die Figuren 23a bis 23i zeigen in stark verkleinertem Maßstab das Schutzgehäuse in verschiedenen möglichen Justierstellungen, nämlich:

Figur 23a eine Wandmontage mit waagrecht ausgerichteten optischen Achsen, Figur 23b eine Wandmontage mit schräg noch oben ausgerichteten optischen Achsen, Figur 23c eine Wandmontage mit parallel zur Wand ausgerichteten optischen Achsen, Figur 23d eine Wandmontage mit schräg nach unten ausgerichteten optischen Achsen, Figur 23e eine Montage an einer schrägen Decken- bzw. Dach-Innenfläche, Figur 23f eine Montage unterhalb einer waagrechten Deckenfläche mit schräg nach unten ausgerichteten optischen Achsen, Figur 23g eine Montage unterhalb einer waagrechten Deckenfläche mit auf den Betrachter zu gerichteten und parallel zur Deckenfläche ausgerichteten optischen Achse, Figur 23h eine Montage unterhalb einer waagrechten Fläche eines Deckenbalkens mit Blickrichtung nach schräg oben und Figur 23i eine Montage auf einer waagrechten Fläche eines Flachdaches oder eines Simses mit Blickrichtung nach schräg unten.

Figur 24 zeigt eine Modifikation der Figur 23c in wiederum vergrößertem Maßstab zur Erläuterung der Beseitigung einer Schiefstellung des Videobildes durch die zweite Drehfassung 22, und zwar oben eine Seitenansicht mit waagrechter Blickrichtung und unten eine Draufsicht mit senkrechter Blickrichtung. Das Bildfenster in der Fensterwand 3 ist schraffiert dargestellt.

Die Achse A1 steht immer waagrecht. Die Achsen A2 und A3 stehen zunächst senkrecht und die Achse A4 wiederum waagrecht. Wird jetzt beispielsweise das Schutzgehäuse 1 um die senkrechte Achse A3 um den Winkel "α" geschwenkt, so bewegt sich die Achse A4 in einer waagrechten Ebene (ganz oben und unten). Die Bildkanten bleiben hierbei waagrecht und senkrecht.

Zum Neigen der Achse A4 wird jetzt die gesamte Anordnung mittels der ersten Drehfassung 11 um die Achse A1 geschwenkt, wobei sich die Achsen A2 und A3 naturgemäß mitdrehen. Dabei stellt sich das Bildfenster schief, wie in der Mitte gezeigt. Diese Schiefstellung wird dadurch ausgeglichen, daß man das Schutzgehäuse 1 mittels der zweiten Drehfassung 22 gegenüber dem dritten Gelenkglied G3 um die Achse A4 in Richtung des Pfeils PF verdreht, wodurch das Videobild wieder "aufgerichtet" wird. Diese Möglichkeit ist in gleicher Weise notwendig bei Bewegungsmeldern, nicht aber bei Scheinwerfern. Der Vergleich zeigt aber, daß der Erfindungsgegenstand ein Universalgerät ist, das sowohl für Videokameras als auch für andere optische Geräte einsetzbar ist, ohne daß besondere Austausch- oder Umbauteile erforderlich sind.

Insbesondere zeigt auch Figur 23g, in welchem Maße die Schiefstellung der Bildachsen bzw. Bildränder durch den Einfluß der zweiten Drehfassung 22 vermieden werden kann. Eine solche Korrektur ist mit den Haltern nach dem Stande der Technik unmöglich.

## Patentansprüche

1. Schutzgehäuse (1) mit einer Rückwand (2), die mit einer Kabeleinführung (14) versehen ist, und mit einer Fensterwand (3) für optische Geräte (5) mit einer optischen Achse (AO), wobei das Schutzgehäuse (1) zum räumlichen Ausrichten der optischen Achse (AO) eine Befestigungseinrichtung (9) mit feststellbaren Gelenkgliedern (G1, G2, G3), Schwenkachsen (A1, A2, A3) und mit einem Haltekörper (10) aufweist, der eine feststellbare Drehfassung (11) mit einer ersten Schwenkachse (A1) und eine Anlagefläche (FA) für das Anbringen an einer Befestigungsfläche (F) besitzt, und wobei die Schwenkachse (A1) der Drehfassung (11) senkrecht zur Anlagefläche (FA) ausgerichtet ist und die Befestigungseinrichtung (9) mindestens eine weitere Schwenkachse (A2, A3) aufweist, die senkrecht zur ersten Schwenkachse (A1) ausgerichtet ist, **dadurch gekennzeichnet, daß**
a) zwischen der Rückwand (2) und dem Haltekörper (10) drei Gelenkglieder (G1, G2, G3) angeordnet sind, wobei das erste Gelenkglied (G1) über die Drehfassung (11) mit dem Haltekörper (10) und das dritte Gelenkglied (G3) mit der Rückwand (2) verbunden ist,
b) bei zwei weiteren, zwischen den Gelenkgliedern (G1/G2 und G2/G3) angeordneten Schwenkachsen (A2 und A3) diese senkrecht zueinander und zur Schwenkachse (A1) der Drehfassung (11) ausgerichtet sind, wobei in montiertem Zustand des Schutzgehäuses (1) eine der weiteren Schwenkachsen (A2 oder A3) waagrecht und die jeweils andere Schwenkachse (A2 oder A3) senkrecht ausgerichtet ist, und daß
c) die Gelenkglieder (G1, G2, G3) einen im wesentlichen in die gestreckte Lage bringbaren Kabelführungskanal umschließen, der zur Kabeleinführung (14) in der Rückwand (2) führt.

2. Schutzgehäuse (1) mit einer Rückwand (2), die mit einer Kabeleinführung (14) versehen ist, und mit einer Fensterwand (3) für optische Geräte (5) mit einer optischen Achse (AO), wobei das Schutzgehäuse (1) zum räumlichen Ausrichten der optischen Achse (AO) eine Befestigungseinrichtung (9) mit feststellbaren Gelenkgliedern (G1, G2, G3), Schwenkachsen (A1, A2, A3) und mit einem Haltekörper (10) aufweist, der eine feststellbare Drehfassung (11) mit einer ersten Schwenkachse (A1) und eine Anlagefläche (FA) für das Anbringen an einer Befestigungsfläche (F) besitzt, und wobei die Schwenkachse (A1) der Drehfassung (11) senkrecht zur Anlagefläche (FA) ausgerichtet ist und die Befestigungseinrichtung (9) mindestens eine weitere Schwenkachse (A2, A3) aufweist, die senkrecht zur ersten Schwenkachse (A1) ausgerichtet ist, **dadurch gekennzeichnet, daß**
a) zwischen der Rückwand (2) und dem Haltekörper (10) mindestens zwei Gelenkglieder (G1, G2, G3) angeordnet sind,
b) das erste Gelenkglied (G1) über die Drehfassung (11) mit dem Haltekörper (10) und das letzte Gelenkglied (G3) mit der Rückwand (2) über eine weitere feststellbare Drehfassung (22) verbunden ist, die eine weitere Schwenkachse (A4) aufweist, die die Rückwand (2) durchdringt und parallel zur optischen Achse (AO) verläuft, und durch die das Schutzgehäuse (1) relativ zum letzten Gelenkglied (G3) und zu der mindestens einen weiteren Schwenkachse (A2, A3) verdrehbar ist. und daß
c) die Gelenkglieder (G1, G2, G3) einen im wesentlichen in die gestreckte Lage bringbaren Kabelführungskanal umschließen, der zur Kabeleinführung (14) in der Rückwand (2) führt.

3. Schutzgehäuse nach Anspruch 1 oder 2, **dadurch gekennzeichnet, daß** das erste Gelenkglied (G1), die erste Schwenkachse (A1) mindestens teilweise umschließend, mittels einer drehbaren Flanschplatte (17) in die Drehfassung (11) eingesetzt ist.

4. Schutzgehäuse nach Anspruchen 1 oder 2, **dadurch gekennzeichnet, daß** zwischen dem an der Drehfassung (11) angeordneten Gelenkglied (G1) und dem an der Rückwand (2) angeordneten Gelenkglied (G3) ein mittleres Gelenkglied (G2) angeordnet ist.

5. Schutzgehäuse nach Anspruch 2, **dadurch gekennzeichnet, daß** bei Anordnung von drei Gelenkgliedern (G1, G2, G3) die zwischen den den Gelenkgliedern (G1/G2 und G2/G3) liegenden Schwenkachsen (A2) und (A3) parallel zueinander verlaufen.

6. Schutzgehäuse nach Anspruch 1, **dadurch gekennzeichnet, daß** mindestens eines der Gelenkglieder (G1, G2, G3) auf mindestes einem Teil seiner Länge einen U-förmigen Querschnitt aufweist.

7. Schutzgehäuse nach Anspruch 1, **dadurch gekennzeichnet, daß** mindestens eines der Gelenkglieder (G1, G2, G3) auf mindestens einem Teil seiner Länge einen rohrförmigen Querschnitt aufweist.

8. Schutzgehäuse nach Anspruch 1 oder 2, **dadurch gekennzeichnet, daß** die Gelenkglieder (G1, G2, G3) in einem Faltenbalg (15) untergebracht sind, der an seinem einen Ende mit dem Haltekörper (10) and an seinem anderen Ende mit der Rückwand (2) des Schutzgehäuses (1) verbunden ist.

9. Schutzgehäuse nach Anspruch 2, **dadurch gekennzeichnet, daß** das letzte Gelenkglied (G3) mittels eines drehbaren Ringflansches (23) in die feststellbare Drehfassung (22) in der Rückwand (2) des Schutzgehäuses (1), eingesetzt ist.

10. Schutzgehäuse nach Anspruch 1 oder 2, **dadurch gekennzeichnet, daß**
a) das erste Gelenkglied (G1) und das dritte Gelenkglied (G3) je eine Teilkugelschale (S1, S3) aufweisen, deren Außenflächen (S1A, S3A) aufeinander zu gerichtet sind und die je eine Durchbrechung (37) aufweisen, wobei die erste Schwenkachse (A1) und die zweite Schwenkachse (A2), beide senkrecht aufeinander stehend, durch den Mittelpunkt (M1) der Teilkugelschale (S1) des ersten Gelenkgliedes (G1) verlaufen, und daß die dritte Schwenkachse (A3) durch den Mittelpunkt (M3) der Teilkugelschale (S3) des dritten Gelenkgliedes (G3) verläuft,
b) das zweite Gelenkglied (G2) als geradliniger Hohlkörper ausgeführt und um die Mittelpunkte (M1, M3) der Teilkugelschalen (S1, S3) schwenkbar durch die Durchbrechungen (37) hindurchgeführt ist,
c) im Innern der Teilkugelschalen (S1, S3) Druckkörper (D1, D3) mit äußeren Rotationsflächen (R1, R3) angeordnet sind, die die Durchbrechungen (37) mindestens teilweise überdecken und mit den beiden Enden des zweiten Gelenkgliedes (G2) zugfest verbunden sind, und daß
d) Spannmittel (33) vorgesehen sind, durch die beiden Druckkörper (D1, D3) und mit ihnen das zweite Gelenkglied (G2) verdrehfest und verschiebefest an den Teilkugelschalen (S1, S2) festlegbar sind.

11. Schutzgehäuse nach Anspruch 10, **dadurch gekennzeichnet, daß** die zweite und die dritte Schwenkachse (A2, A3) parallel zueinander, durch die Mittelpunkte (M1, M3) der beiden Teilkugelschalen (S1, S3) verlaufen.

12. Schutzgehäuse nach Anspruch 10, **dadurch gekennzeichnet, daß** das Spannmittel (33) ein zwischen den Teilkugelschalen (S1, S3) angeordnetes und das zweite Gelenkglied umgebendes, axial geteiltes Druckglied mit den Teilkugelschalen (S1, S3) angepaßten konkaven Druckflächen (36) ist, durch deren radiales Zusammenziehen die Teilkugelschalen (S1, S3) gegen die beiden Druckkörper (D1, D3) verspannbar sind.

13. Schutzgehäuse nach Anspruch 10, **dadurch gekennzeichnet, daß** die Durchbrechungen (37) in den Teilkugelschalen (S1, S3) schlitzförmig ausgebildet und von untereinander parallelen Kanten (38) begrenzt sind, deren Abstand (D) den Außerquerschnitt des zweiten Gelenkgliedes (G2) entsprechen, und daß die Durchbrechungen (37) sich mindestens zwischen der Achse und dem Rand der Teilkugelschale (S1, S3) erstrecken.

14. Schutzgehäuse nach Anspruch 10, **dadurch gekennzeichnet, daß** die Teilkugelschalen (S1, S3) an ihrer Basis durch einen hohlzylindrischen Abschnitt (Z) gleichen Durchmessers verlängert sind.

15. Schutzgehäuse nach Anspruch 10, **dadurch gekennzeichnet, daß** das zweite Gelenkglied (G2) als Hohlzylinder ausgebildet ist.

16. Schutzgehäuse nach Anspruch 10, **dadurch gekennzeichnet, daß** das zweite Gelenkglied (G2) als Vierkantrohr ausgebildet ist.

17. Schutzgehäuse nach Anspruch 10, **dadurch gekennzeichnet, daß** die Teilkugelschale (S3) des dritten Gelenkgliedes (G3) durch eine Drehfassung (22) mit dem Schutzgehäuse (1) verbunden ist.

## Claims

1. Protective casing (1) comprising a rear wall (2) which is provided with a cable inlet (14), and a window wall (3) for optical devices (5) with an optical axis (AO), and the protective casing (1) comprises for spatial orientation of the optical axis (AO) a fixing device (9) with securable hinge elements (G1, G2, G3), pivotal axes (A1, A2, A3) and a holding body (10) which has a securable rotary socket (11) with a first pivotal axis (A1) and an abutment surface (FA) for mounting onto a fixing surface (F), and the pivotal axis (A1) of the rotary socket (11) is oriented vertically to the abutment surface (FA), and the fixing device (9) has at least one further pivotal axis (A2, A3) oriented vertically to the first pivotal axis (A1), **characterised in that**
a: between the rear wall (2) and the holding body (10) are arranged three hinge elements (G1, G2, G3), and the first hinge element (G1) is linked via the rotary socket (11) to the holding body (10), and the third hinge element (G3) is linked to the rear wall (2);
b: with two further pivotal axes (A2 and A3) arranged between the hinge elements (G1/G2 and G2/G3), these are arranged vertically relative to each other and to the pivotal axis (A1) of the rotary socket (11), and in the mounted state of the protective housing (1) one of the additional pivotal axes (A2 or A3) is arranged horizontally, and the respective other pivotal axis (A2 or A3) is arranged vertically; and
c: the hinge elements (G1, G2, G3) encase a cable guiding channel which is essentially placed in the stretched position and which leads to the cable feed (14) in the rear wall (2).

2. Protective casing (1) with a rear wall (2) which is provided with a cable inlet (14), and with a window wall (3) for optical devices (5) with an optical axis (AO), and the protective casing (1) comprises for spatial alignment of the optical axis (AO) a fixing device (9) with securable hinge elements (G1, G2, G3), pivotal axes (A1, A2, A3) and with a holding body (10) which has a securable rotary socket (11) with a first pivotal axis (A1) and an abutment surface (FA) for attachment to a mounting surface (F), and the pivotal axis (A1) of the rotary socket (11) is aligned vertically to the abutment surface (FA), and the fixing device (9) comprises at least one additional pivotal axis (A2, A3) which is aligned vertically to the first pivotal axis (A1), **characterised in that**
a: between the rear wall (2) and the holding body (10) are arranged at least two hinge elements (G1, G2, G3);
b: the first hinge element (G1) is linked via the rotary socket (11) to the holding body (10), and the last hinge element (G3) is linked to the rear wall (2) via an additional securable rotary socket (22) which has an additional pivotal axis (A4) which penetrates the rear wall (2) and extends parallel to the optical axis (AO) and by means of which the protective casing (1) is rotary relative to the last hinge element (G3) and relative to the at least one further pivotal axis (A2, A3); and
c: the hinge elements (G1, G2, G3) include a cable guiding channel which is essentially placed into the stretched position and which leads to the cable inlet (14) in the rear wall (2).

3. Protective casing according to Claim 1 or Claim 2, **characterised in that** the first hinge element (G1), which at least partially encases the first pivotal axis (A1), is inserted into the rotary socket (11) by means of a rotary flange plate (17).

4. Protective casing according to Claims 1 or 2, **characterised in that** a central hinge element (G2) is arranged between the hinge element (G1) located on rotary socket (11) and the hinge element (G3) arranged on the rear wall (2).

5. Protective casing according to Claim 2, **characterised in that** with an arrangement of three hinge elements (G1, G2, G3), the pivotal axes (A2) and (A3) located between the hinge elements (G1/G2 and G2/G3) extend parallel to each other.

6. Protective casing according to Claim 1, **characterised in that** at least one of the hinge elements (G1, G2, G3) is on at least a portion of its length of U-shaped cross-section.

7. Protective casing according to Claim 1, **characterised in that** at least one of the hinge elements (G1, G2, G3) is on at least a portion of its length of tubular cross-section.

8. Protective casing according to Claim 1 or 2, **characterised in that** the hinge elements (G1, G2, G3) are accommodated in a fold bellows (15) which is at its one end connected to the holding body (10) and at its other end to the rear wall (2) of the protective casing (1).

9. Protective casing according to Claim 2, **characterised in that** the last hinge element (G3) is by means of a rotary annular flange (23) inserted into the securable rotary socket (22) in the rear wall (2) of the protective casing (1).

10. Protective casing according to Claim 1 or 2, **characterised in that**
a: the first hinge element (G1) and the third hinge element (G3) each have a partially spherical dish (S1, S3) the outer surfaces (S1A, S3A) of which are oriented towards each other and which have each a passage (37), and the first pivotal axis (A1) and the second pivotal axis (A2), both of them standing vertically on each other, extend through the centre point (M1) of the partially spherical dish (S1) of the first hinge element (G1), and the third pivotal axis (A3) extends through the centre point (M3) of the partially spherical dish (S3) of the third hinge element (G3);
b: the second hinge element (G2) is designed as a straight hollow body and passed through the passages (37) whilst being pivotal around the centre points (M1, M3) of the partially spherical dishes (S1, S3);
c: inside the partially spherical dishes (S1, S3) are arranged pressure elements (D1, D3) with external rotational surfaces (R1, R3) which at least partially cover the passages (37) and which are torsionally fixed to both ends of the second hinge element (G2); and
d: clamping means (33) are provided by means of which both pressure elements (D1, D3) and with them the second hinge element (G2) are securable so as to be non-rotational and immovable.

11. Protective casing according to Claim 10, **characterised in that** the second and the third pivotal axis (A2, A3) extend parallel to each other through the centre points (M1, M3) of the two partially spherical dishes (S1, S3).

12. Protective casing according to Claim 10, **characterised in that** the clamping means (33) is an axially split pressure element arranged between the partially spherical dishes (S1, S3) and encasing the second hinged element and with concave pressure surfaces (36) which are matched to the partially spherical dishes (S1, S3), radial pulling together of which clamps the partially spherical dishes (S1, S3) against both pressure elements (D1, D3).

13. Protective casing according to Claim 10, **characterised in that** the passages (37) in the partially spherical dishes (S1, S3) are slotshaped and defined by edges (38) which are parallel to each other and the distance (D) of which corresponds with the external cross-section of the second hinge element (G2), and the passages (37) extend at least between the axis and the edge of the partially spherical dish (S1, S3).

14. Protective casing according to Claim 10, **characterised in that** the partially spherical dishes (S1, S3) are at their base extended by a hollow-cylindrical section (Z) of the same diameter.

15. Protective casing according to Claim 10, **characterised in that** the second hinged element (G2) is designed as a hollow cylinder.

16. Protective casing according to Claim 10, **characterised in that** the second hinge element (G2) is designed as a rectangular hose.

17. Protective casing according to Claim 10, **characterised in that** the partially spherical dish (S3) of the third hinge element (G3) is joined to the protective casing (1) by a rotary socket (22).

## Revendications

1. Boîtier de protection (1) comportant une paroi arrière (2), qui est pourvue d'une entrée (14) pour câble, et une paroi à fenêtre (3) pour des appareils optiques (5) comportant un axe optique (AO), le boîtier de protection (1) comportant pour l'alignement spatial de l'axe optique (AO) un dispositif de fixation (9) comportant des éléments d'articulation (G1, G2, G3) pouvant être fixés, des axes de pivotement (A1, A2, A3) et un corps de retenue (10), qui possède une monture rotative (11) pouvant être fixée possédant un premier axe de pivotement (A1) et une surface d'application (FA) pour l'application sur une surface de fixation (F), et dans lequel l'axe de pivotement (A1) de la monture rotative (11) est orienté perpendiculairement à la surface d'application (FA) et le dispositif de fixation (9) comporte au moins un autre axe de pivotement (A2, A3), qui est orienté de manière à être perpendiculairement au premier axe de pivotement (A1), **caractérisé en ce que**
a) entre la paroi arrière (2) et le corps de retenue (10) sont disposés trois éléments d'articulation (G1, G2, G3), parmi lesquels le premier élément d'articulation (G1) est relié par l'intermédiaire de la monture rotative (11) au corps de retenue (10), et le troisième élément d'articulation (G3) est relié à la paroi arrière (2),
b) dans le cas de deux autres axes de pivotement (A2 et A3), qui sont disposés entre les éléments d'articulation (G1/G2 et G2/G3), ces axes sont orientés perpendiculairement entre eux et à l'axe de pivotement (A1) de la monture rotative (11), auquel cas lorsque le boîtier de protection (1) est à l'état monté, l'un des autres axes de pivotement (A2 ou A3) est orienté horizontalement et l'autre axe de pivotement respectif (A2 ou A3) est orienté perpendiculairement, et que
c) les éléments d'articulation (G1, G2, G3) entourent un canal de guidage de câble, qui peut être amené dans une position étirée et qui réalise un guidage jusqu'à l'entrée (14) pour le câble dans la paroi arrière (2).

2. Boîtier de protection (1) comportant une paroi arrière (2), qui est pourvue d'une entrée (14) pour câble, et une paroi à fenêtre (3) pour des appareils optiques (5) comportant un axe optique (AO), le boîtier de protection (1) comportant pour l'alignement spatial de l'axe optique (AO) un dispositif de fixation (9) comportant des éléments d'articulation (G1, G2, G3) pouvant être fixés, des axes de pivotement (A1, A2, A3) et un corps de retenue (10), qui possède une monture rotative (11) pouvant être fixée possédant un premier axe de pivotement (A1) et une surface d'application (F1) pour l'application sur une surface de fixation (F), et dans lequel l'axe de pivotement (A1) de la monture rotative (11) est orienté perpendiculairement à la surface d'application (FA) et le dispositif de fixation (9) comporte au moins un autre axe de pivotement (A2, A3), qui est orienté de manière à être perpendiculairement au premier axe de pivotement (A1), **caractérisé en ce que**
a) deux éléments d'articulation (G1, G2, G3) sont disposés entre la paroi arrière (2) et le corps de retenue (10),
b) le premier élément d'articulation (G1) est relié par l'intermédiaire de la monture rotative (11) au corps de retenue (10) et le second élément d'articulation (G2) est relié à la paroi arrière (2) par l'intermédiaire d'une autre monture rotative (22) pouvant être fixée, qui comporte un autre axe de pivotement (A4), qui traverse la paroi arrière (2) et s'étend parallèlement à l'axe optique (OA), et au moyen duquel le boîtier de protection (1) peut être entraîné en rotation par rapport au dernier élément d'articulation (G3) et par rapport à au moins un autre axe de pivotement (A2, A3), et que
c) les éléments d'articulation (G1, G2, G3) entourent un canal de guidage du câble, qui peut être amené essentiellement dans la position étirée et qui conduit jusqu'à l'entrée (14) pour le câble dans la paroi arrière (2).

3. Boîtier de protection selon la revendication 1 ou 2, **caractérisé en ce que** le premier élément d'articulation (G1) est inséré, tout en entourant au moins partiellement le premier axe de pivotement (A1), dans la monture rotative (11) à l'aide d'une plaque rotative à bride (17).

4. Boîtier de protection selon la revendication 1 ou 2, **caractérisé en ce qu'**un élément d'articulation médian (G2) est disposé entre l'élément d'articulation (G1) disposé sur la monture rotative (1) et l'élément d'articulation (G3) disposé sur la paroi arrière (2).

5. Boîtier de protection selon la revendication 2, **caractérisé en ce que** dans le cas du dispositif de montage de trois éléments d'articulation (G1, G2, G3), les axes de pivotement (A2) et (A3), qui sont situés entre les éléments d'articulation (G1/G2 et G2/G3), sont parallèlement entre eux.

6. Boîtier de protection selon la revendication 1, **caractérisé en ce qu'**au moins l'un des éléments d'articulation (G1, G2, G3) possède sur au moins une partie de cette longueur, une section transversale en forme de U.

7. Boîtier de protection selon la revendication 1, **caractérisé en ce qu'**au moins l'un des éléments d'articulation (G1, G2, G3) possède au moins sur une partie de sa longueur une section transversale de forme tubulaire.

8. Boîtier de protection selon la revendication 1 ou 2, **caractérisé en ce que** les éléments d'articulation (G1, G2, G3) sont logés dans un soufflet (15) qui est relié par l'une de ses extrémités au corps de retenue (10) et par son autre extrémité à la paroi arrière (2) du boîtier de protection (1).

9. Boîtier de protection selon la revendication 2, **caractérisé en ce que** le dernier élément d'articulation (G3) est inséré, au moyen d'une bride annulaire rotative (23), dans la monture rotative réglable (22) formée dans la paroi arrière (2) du boîtier de protection (1).

10. Boîtier de protection selon la revendication 1 ou 2, **caractérisé en ce que**
a) le premier élément d'articulation (G1) et le troisième élément d'articulation (G3) comportent chacun une coque partiellement sphérique (S1, S3), dont les surfaces extérieures (S1A, S3A) sont dirigées l'une vers l'autre, et qui possèdent chacun un passage (37), le premier axe de pivotement (A1) et le second axe de pivotement (A2), qui sont perpendiculaires entre eux, passant par le point médian (M1) de la coque partiellement sphérique (S1) du premier élément d'articulation (G1) et que le troisième axe de pivotement (A3) passe par le centre (N3) de la coque sphérique partielle (S3) du troisième élément d'articulation (G3),
b) le second élément d'articulation (G2) est agencé sous la forme d'un corps creux rectiligne et traverse les passages (37), tout en pouvant pivoter autour des centres (M1, M3) des coques partiellement sphériques (S1, S3),
c) à l'intérieur des coques partiellement sphériques (S1, S3) sont disposés des corps de pression (D1, D3) possédant des surfaces extérieures de rotation (R1, R3), qui recouvrent au moins partiellement les passages (37) et sont reliées d'une manière rigide en traction aux deux extrémités du second élément d'articulation (G2),
et que
d) il est prévu des moyens de serrage (33), à l'aide desquels les deux corps de pression (D1, D3) doivent être fixés par le second élément d'articulation (G2) d'une manière bloquée en rotation et bloquée en translation, sur les coques partiellement sphériques (S1, S2).

11. Boîtier de protection selon la revendication 10, **caractérisé en ce que** les second et troisième axes de pivotement (A2, A3) sont parallèles entre eux et passent par les centres (M1, M3) des deux coques partiellement sphériques (S1, S3).

12. Boîtier de protection selon la revendication 10, **caractérisé en ce que** les moyens de serrage (33) sont constitués par un élément de pression divisé axialement, qui est disposé entre les coques partielles sphériques (S1, S3) et entourant le second élément d'articulation, et qui est équipé de surfaces de pression concaves (36), qui sont adaptées aux coques partiellement sphériques (S1, S3) et au moyen de l'assemblage radial desquels les coques partiellement sphériques (S1, S3) peuvent être serrées contre les deux corps de pression (D1, D3).

13. Boîtier de protection selon la revendication 10, **caractérisé en ce que** les passages (37) dans les coques partiellement sphériques (S1, S3) agencées partiellement en forme de fentes et sont limités par des arêtes (38) parallèles entre elles, dont la distance (D) correspond à la section transversale extérieure du second élément d'articulation (G2), et que les passages (37) s'étendent au moins entre l'axe et le bord de la coque partiellement sphérique (S1, S3).

14. Boîtier de protection selon la revendication 10, **caractérisé en ce que** les coques partiellement sphériques (S1, S3) sont prolongées, au niveau de leur base, par une section cylindrique creuse (Z) de même diamètre.

15. Boîtier de protection selon la revendication 10, **caractérisé en ce que** le second élément d'articulation (G2) est agencé sous la forme d'un cylindre creux.

16. Boîtier de protection selon la revendication 10, **caractérisé en ce que** le second élément d'articulation (G2) est agencé sous la forme d'un tube de section carrée.

17. Boîtier de protection selon la revendication 10, **caractérisé en ce que** la coque partiellement sphérique (S3) du troisième élément d'articulation (G3) est reliée par une monture rotative (22) au boîtier de protection (1).
